(19) Europäisches Patentamt
European Patent Office
Office européen des brevets

(11) EP 3 904 048 A1

(12) EUROPEAN PATENT APPLICATION
published in accordance with Art. 153(4) EPC

(43) Date of publication:
**03.11.2021 Bulletin 2021/44**

(21) Application number: **19901661.9**

(22) Date of filing: **27.12.2019**

(51) Int Cl.:
***B29C 55/02*** (2006.01) ***B29C 55/06*** (2006.01)
***B29C 55/14*** (2006.01) ***H01B 17/56*** (2006.01)
***C08L 101/00*** (2006.01) ***H01B 3/30*** (2006.01)
***C08J 5/18*** (2006.01) ***C08K 3/26*** (2006.01)
***C08K 3/36*** (2006.01) ***B29C 48/08*** (2019.01)
***B29C 48/305*** (2019.01) ***B29C 48/88*** (2019.01)

(86) International application number:
**PCT/JP2019/051446**

(87) International publication number:
**WO 2020/138426 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018245276**
**27.12.2018 JP 2018245277**
**05.06.2019 JP 2019105758**
**05.06.2019 JP 2019105759**
**13.12.2019 JP 2019225008**
**13.12.2019 JP 2019225009**

(71) Applicant: **Oji Holdings Corporation**
**Chuo-ku**
**Tokyo 104-0061 (JP)**

(72) Inventors:
- **SUEI, Takumi**
**Tokyo 104-0061 (JP)**
- **IKEDA, Kazuo**
**Tokyo 104-0061 (JP)**
- **KAKEHI, Akihiro**
**Tokyo 104-0061 (JP)**
- **ISHIWATA, Tadakazu**
**Tokyo 104-0061 (JP)**

(74) Representative: **Müller-Boré & Partner Patentanwälte PartG mbB**
**Friedenheimer Brücke 21**
**80639 München (DE)**

# (54) AMORPHOUS THERMOPLASTIC RESIN FILM, CAPACITOR METALIZED FILM, FILM ROLL, AND CAPACITOR

(57) Provided is an amorphous thermoplastic resin film having a high dielectric breakdown strength at a high temperature, having a small thickness, and having excellent slit processing suitability. This amorphous thermoplastic resin film has a thickness of 9.5 μm or less, and comprises an amorphous thermoplastic resin having a glass transition point (Tg) of at least 130°C but less than 200°C, and one type of particle selected from the group consisting of silica and calcium carbonate. The average particle diameter of the particles is 0.1-1.5 μm, the content ratio of the particles is 0.1-1.5 mass%.

EP 3 904 048 A1

## Description

TECHNICAL FIELD

The present invention relates to an amorphous thermoplastic resin film, a capacitor metalized film, and a capacitor.

BACKGROUND ART

Conventionally, in electric and electronic devices, as, for example, high voltage capacitors, filter capacitors for various switching regulators, converters, inverters, and the like, smoothing capacitors, and the like, capacitors using a resin film have been used. In such a capacitor, the resin film constitutes, as a dielectric film for capacitors, a capacitor by, for example, (i) a method of forming a so-called "metalized film" in which a conductive layer such as a metal layer is provided on a dielectric film by, for example, a method such as vacuum plating such as metal vapor deposition or sputtering, coating/drying of a metal-containing paste, or pressure bonding of a metal foil or metal powder, (ii) a method of stacking the dielectric film in which a conductive layer such as a metal layer is not provided and another conductor such as a metal foil or a metalized film in which a metal layer is provided by a method similar to (i), or another method. Dielectric films for capacitors have been used also as capacitors for inverter power supplies that regulate drive motors of electric automobiles, hybrid automobiles, and the like which have been increasing in demand in recent years.

In the above applications, for example, capacitors used for automobiles are used in high temperature environments, and therefore, a dielectric film for capacitors that has high dielectric breakdown strength even at high temperatures is required. In addition, in recent years, the required temperature for automobiles has increased more than before, and the required temperature may exceed 120°C and reach 140°C in some cases.

For example, Patent Document 1 discloses a plastic film capacitor in which a film containing an aromatic polyethersulfone resin having high heat resistance as a main component is used as a dielectric thin film.

PRIOR ART DOCUMENT

PATENT DOCUMENT

Patent Document 1: Japanese Patent Laid-open Publication No. 60-68505

SUMMARY OF THE INVENTION

PROBLEMS TO BE SOLVED BY THE INVENTION

As described above, a dielectric film for capacitors having high dielectric breakdown strength at high temperature is required for a capacitor used in a high-temperature environment.

In order to reduce a size of the capacitor and increase a capacitance of the capacitor (that is, increase an electrostatic capacitance per unit volume of the capacitor using the dielectric film for capacitors), it is required to reduce the thickness of the dielectric film for capacitors as much as possible.

In addition, the dielectric film for capacitors is usually continuously produced, stored, and distributed as a wound body of a long film. When a capacitor metalized film is produced by stacking a metal layer on the dielectric film for capacitors, or when the dielectric film for capacitors is used for a capacitor, a step of cutting (slitting) the dielectric film for capacitors into a desired width while unwinding the dielectric film for capacitors from a wound body, and obtaining a small wound body again is performed. In such a step of slitting the dielectric film for capacitors, when slipperiness of the dielectric film for capacitors is low, there arises a problem of causing generation of misalignment or wrinkles in the dielectric film for capacitors at the time of unwinding or winding.

Under such circumstances, a main object of the present invention is to provide an amorphous thermoplastic resin film having high dielectric breakdown strength at high temperature, having a small thickness, and having excellent slit processing suitability.

MEANS FOR SOLVING THE PROBLEM

The inventors of the present invention conducted a diligent study to solve the aforementioned problem. As a result, the inventors of the present invention have found that it is possible to obtain an amorphous thermoplastic resin film constituted of a resin film including an amorphous thermoplastic resin having a glass transition temperature (Tg) within a predetermined range and at least one kind of particles selected from the group consisting of silica and calcium

carbonate, and when an average particle size of the particles is in a predetermined range, a content of the particles in the entire film is set to a predetermined range, and a thickness is reduced to 9.5 μm or less, the amorphous thermoplastic resin film has high dielectric breakdown strength at high temperature, a small thickness, and excellent slit processing suitability. The amorphous thermoplastic resin film has high dielectric breakdown strength at high temperature, and thus can be suitably used for, for example, a capacitor used in a high-temperature environment such as a capacitor for automobiles. Since the amorphous thermoplastic resin film has a very small thickness of 9.5 μm or less, an electrostatic capacitance per unit volume is large. In addition, the amorphous thermoplastic resin film has excellent slit processing suitability, and is thus excellent in productivity.

The inventors of the present invention conducted a diligent study to solve the aforementioned problem. As a result, the inventors of the present invention also have found that it is possible to obtain an amorphous thermoplastic resin film constituted of a resin film including an amorphous thermoplastic resin having a glass transition temperature (Tg) within a predetermined range and having a sulfonyl group ($-SO_2-$) in a main chain and at least one kind of particles selected from the group consisting of silica and calcium carbonate, and when an average particle size of the particles is in a predetermined range, a content of the particles in the entire film is set to a predetermined range, and a thickness is reduced to 9.5 μm or less, the amorphous thermoplastic resin film has high dielectric breakdown strength at high temperature, a small thickness, and excellent slit processing suitability. The amorphous thermoplastic resin film has high dielectric breakdown strength at high temperature, and thus can be suitably used for, for example, a capacitor used in a high-temperature environment such as a capacitor for automobiles. Since the amorphous thermoplastic resin film has a very small thickness of 9.5 μm or less, an electrostatic capacitance per unit volume is large. In addition, the amorphous thermoplastic resin film has excellent slit processing suitability, and is thus excellent in productivity.

The present invention was completed as a result of further research conducted based on these findings.

That is, the present invention includes the following.

Item 1. An amorphous thermoplastic resin film including an amorphous thermoplastic resin having a glass transition temperature (Tg) of 130°C or more and less than 200°C and at least one kind of particles selected from the group consisting of silica and calcium carbonate,

wherein
an average particle size of the particles is 0.1 μm or more and 1.5 μm or less,
a content of the particles is 0.1% by mass or more and 1.5% by mass or less, and
a thickness is 9.5 μm or less.

Item 2. The amorphous thermoplastic resin film according to Item 1, wherein dielectric breakdown strength in an environment at 125°C is 300 $V_{DC}/\mu m$ or more.
Item 3. The amorphous thermoplastic resin film according to Item 1 or 2, wherein the amorphous thermoplastic resin has a repeating unit represented by formula: $-[Ph-C(CH_3)_2-Ph]-$ in a main chain.
Item 4. The amorphous thermoplastic resin film according to any one of Items 1 to 3, including an unstretched film.
Item 5. An amorphous thermoplastic resin film including an amorphous thermoplastic resin having a glass transition temperature (Tg) of 170°C or more and 230°C or less and having a sulfonyl group in a main chain and at least one kind of particles selected from the group consisting of silica and calcium carbonate,

wherein
an average particle size of the particles is 0.1 μm or more and 1.5 μm or less,
a content of the particles is 0.1% by mass or more and 1.5% by mass or less, and
a thickness is 9.5 μm or less.

Item 6. The amorphous thermoplastic resin film according to item 5, wherein dielectric breakdown strength in an environment at 140°C is 300 $V_{DC}/\mu m$ or more.
Item 7. The amorphous thermoplastic resin film according to Item 5 or 6, wherein dielectric breakdown strength in an environment at 125°C is 400 $V_{DC}/\mu m$ or more. Item 8. The amorphous thermoplastic resin film according to any one of Items 5 to 7, including a stretched film.
Item 9. The amorphous thermoplastic resin film according to any one of Items 1 to 8, which is a dielectric film for capacitors.
Item 10. A film roll obtained by winding the amorphous thermoplastic resin film according to any one of Items 1 to 9.
Item 11. A capacitor metalized film including a metal film on one side or both sides of the amorphous thermoplastic resin film according to any one of Items 1 to 9.
Item 12. A capacitor including the amorphous thermoplastic resin film according to Item 1 to 9.

## ADVANTAGES OF THE INVENTION

According to the present invention, it is possible to provide an amorphous thermoplastic resin film having high dielectric breakdown strength at high temperature, having a small thickness, and having excellent slit processing suitability. Furthermore, according to the present invention, it is also possible to provide a film roll using the amorphous thermoplastic resin film, a capacitor metalized film that is reduced in size and increased in capacitance due to its small thickness, and a capacitor.

## EMBODIMENTS OF THE INVENTION

An amorphous thermoplastic resin film according to a first embodiment of the present invention is an amorphous thermoplastic resin film including an amorphous thermoplastic resin having a glass transition temperature (Tg) of 130°C or more and less than 200°C and at least one kind of particles selected from the group consisting of silica and calcium carbonate, and in this amorphous thermoplastic resin film, an average particle size of the particles is 0.1 μm or more and 1.5 μm or less, a content of the particles is 0.1% by mass or more and 1.5% by mass or less based on 100% by mass of the amorphous thermoplastic resin film, and a thickness is 9.5 μm or less.

Since the amorphous thermoplastic resin film according to the first embodiment of the present invention has such a configuration, the amorphous thermoplastic resin film exhibits characteristics that it has high dielectric breakdown strength at high temperature, has a small thickness, and having excellent slit processing suitability. Since the amorphous thermoplastic resin film according to the first embodiment has high dielectric breakdown strength at high temperature (for example, the dielectric breakdown strength in an environment at 125°C is $300V_{DC}/\mu m$ or more), the amorphous thermoplastic resin film can be suitably used as a dielectric film for capacitors, and particularly can be suitably used for a capacitor used in a high-temperature environment. Since the amorphous thermoplastic resin film according to the first embodiment has a very small thickness of 9.5 μm or less, when the film is used for a film capacitor using the film as a dielectric, an electrostatic capacitance per unit volume is large. In addition, the amorphous thermoplastic resin film according to the first embodiment has excellent slit processing suitability, and is thus excellent in productivity. In the amorphous thermoplastic resin film according to the first embodiment, it is not assumed that a thickness of the film exceeds 9.5 μm (for example, 10 μm, 11 μm, 20 μm, etc.) in order to increase the electrostatic capacitance per unit volume when the film is used for the film capacitor.

An amorphous thermoplastic resin film according to a second embodiment of the present invention is an amorphous thermoplastic resin film including an amorphous thermoplastic resin having a glass transition temperature (Tg) of 170°C or more and 230°C or less and having a sulfonyl group in a main chain and at least one kind of particles selected from the group consisting of silica and calcium carbonate, and in this amorphous thermoplastic resin film, an average particle size of the particles is 0.1 μm or more and 1.5 μm or less, a content of the particles is 0.1% by mass or more and 1.5% by mass or less based on 100% by mass of the amorphous thermoplastic resin film, and a thickness is 9.5 μm or less.

Since the amorphous thermoplastic resin film according to the second embodiment has such a configuration, the amorphous thermoplastic resin film exhibits characteristics that it has high dielectric breakdown strength at high temperature, has a small thickness, and having excellent slit processing suitability. Since the amorphous thermoplastic resin film according to the second embodiment has high dielectric breakdown strength at high temperature (for example, the dielectric breakdown strength in an environment at 125°C is $300V_{DC}/\mu m$ or more, and the dielectric breakdown strength in an environment at 140°C is $300V_{DC}/\mu m$ or more), the amorphous thermoplastic resin film can be suitably used as a dielectric film for capacitors, and particularly can be suitably used for a capacitor used in a high-temperature environment. Since the amorphous thermoplastic resin film according to the second embodiment has a very small thickness of 9.5 μm or less, when the film is used for a film capacitor using the film as a dielectric, the electrostatic capacitance per unit volume is large. In addition, the amorphous thermoplastic resin film according to the second embodiment has excellent slit processing suitability, and is thus excellent in productivity. Also in the amorphous thermoplastic resin film according to the second embodiment, it is not assumed that a thickness of the film exceeds 9.5 μm (for example, 10 μm, 11 μm, 20 μm, etc.) in order to increase the electrostatic capacitance per unit volume when the film is used for the film capacitor.

Hereinafter, the amorphous thermoplastic resin film according to the first embodiment of the present invention and the amorphous thermoplastic resin film according to the second embodiment will be described in detail in order. In addition, capacitor metalized films and capacitors using the amorphous thermoplastic resin films according to these embodiments will be described in detail. In the present specification, any numerical range indicated by "... to ..." is intended to mean "... or more" and "... or less". That is, the notation $\alpha$ to $\beta$ is intended to mean $\alpha$ or more and $\beta$ or less, or $\beta$ or more and $\alpha$ or less, and includes $\alpha$ and $\beta$ as ranges. In the present specification, "% by mass" indicating the content of each component refers to a ratio of the content based on 100% by mass of the amorphous thermoplastic resin film, unless otherwise specified.

1. Amorphous thermoplastic resin film according to first embodiment

The amorphous thermoplastic resin film according to the first embodiment includes a film containing an amorphous thermoplastic resin and at least one kind of particles selected from the group consisting of silica and calcium carbonate. Specifically, the amorphous thermoplastic resin film according to the first embodiment is a resin film in which particles of at least one of silica and calcium carbonate are dispersed in the amorphous thermoplastic resin as a base resin.

The amorphous thermoplastic resin has a glass transition temperature (Tg) of 130°C or more and less than 200°C. The glass transition temperature is preferably 135 to 195°C, more preferably 140 to 190°C, still more preferably 150 to 190°C, and particularly preferably 160 to 190°C from the viewpoint of suitably exhibiting the characteristics of having high dielectric breakdown strength at high temperature, being thin, and being excellent in slit processing suitability, and enhancing the continuous film forming properties of the amorphous thermoplastic resin film (specifically, increasing a length by which the film can be formed without breakage).

In the first embodiment, the glass transition temperature (Tg) is a value measured using a differential scanning calorimeter (DSC), and specifically, is measured by a method described in Examples.

In the first embodiment, the "amorphous thermoplastic resin" is a resin which has the glass transition temperature (Tg) but does not have an endothermic peak (melting point) associated with clear melting in the measurement using a differential scanning calorimeter (DSC) (specifically, measurement by a method described in Examples). Specific examples of the amorphous thermoplastic resin include polycarbonate, polysulfone, polyethersulfone, polyphenylsulfone, amorphous polystyrene, acrylic resin, ABS resin, polyphenylene ether, polyarylate, polyamideimide, polyetherimide, thermoplastic amorphous polyimide, amorphous cycloolefin polymer, and amorphous cycloolefin copolymer.

The amorphous thermoplastic resin is not particularly limited as long as it is a resin having a glass transition temperature (Tg) of 130°C or more and less than 200°C. However, an amorphous thermoplastic resin having a repeating unit represented by Formula: $-[Ph-C(CH_3)_2-Ph]-$ in the main chain is preferable from the viewpoint of suitably exhibiting the characteristics of having high dielectric breakdown strength at high temperature, being thin, and being excellent in slit processing suitability.

Formula: $-[Ph-C(CH_3)_2-Ph]-$ is expressed by a chemical formula as follows.

[Chem. 1]

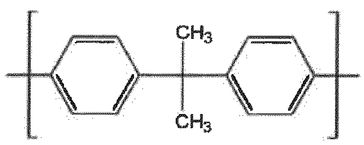

Preferred specific examples of the amorphous thermoplastic resin include polysulfone, polycarbonate, and the like having the above repeating unit. The amorphous thermoplastic resin contained in the amorphous thermoplastic resin film may be one kind or two or more kinds.

The polysulfone is not particularly limited, a known polysulfone can be used, and a commercially available polysulfone can also be used. Examples of commercially available products of polysulfone include product name: Ultrason (registered trademark) (for example, Ultrason (registered trademark) S6010, Ultrason (registered trademark) S3010, and Ultrason (registered trademark) S2010) manufactured by BASF SE, and product name: Udel (registered trademark) (for example, Udel (registered trademark) P-1700) manufactured by Solvey.

The glass transition temperature (Tg) of polysulfone may be in a range of 130°C or more and less than 200°C, and is preferably 160 to 195°C, more preferably 170 to 190°C, and still more preferably 180 to 190°C. A mass (weight) average molecular weight of polysulfone is not particularly limited, and is, for example, about 10,000 to 100,000, preferably about 15,000 to 80,000. A MVR (melt volume-flow rate) of polysulfone is preferably 100 $cm^3$/10 min or less, more preferably 50 $cm^3$/10 min or less, and still more preferably 35 $cm^3$/10 min or less. The lower limit of the MVR is, for example, 20 $cm^3$/10 min.

In the first embodiment, the mass (weight) average molecular weight of the resin can be measured using a gel permeation chromatograph (GPC) apparatus. The MVR of polysulfone is a value measured under conditions of a temperature of 360°C and a load of 10 kg in accordance with the provisions of ISO 1133.

The polycarbonate is not particularly limited, a known polycarbonate can be used, and a commercially available polycarbonate can also be used. Examples of commercially available products of polycarbonate include product name: Panlite (registered trademark) (for example, Panlite (registered trademark) K-1300Y) manufactured by Teijin Limited, product name: Iupilon (registered trademark) (for example, Iupilon (registered trademark) E-2000) manufactured by Mitsubishi Engineering-Plastics Corporation, and Novarex (registered trademark) (for example, Novarex (registered trademark) 7030R).

The glass transition temperature (Tg) of polycarbonate may be in a range of 130°C or more and less than 200°C, and is preferably 130 to 170°C, more preferably 140 to 165°C, and still more preferably 145 to 160°C. A mass (weight) average molecular weight of polycarbonate is not particularly limited, and is, for example, about 10,000 to 100,000, preferably about 15,000 to 80,000.

A content of the amorphous thermoplastic resin in the amorphous thermoplastic resin film according to the first embodiment is, for example, 55% by mass or more, preferably 60 to 99.9% by mass, more preferably 65 to 99.5% by mass, and still more preferably 70 to 99.0% by mass.

The amorphous thermoplastic resin film according to the first embodiment may contain another resin different from the amorphous thermoplastic resin having a glass transition temperature (Tg) of 130°C or more and less than 200°C as long as the effect of the present invention is not impaired. Examples of such another resin include amorphous thermoplastic resins having a glass transition temperature (Tg) of less than 130°C, amorphous thermoplastic resins having a glass transition temperature (Tg) of 200°C or more, and crystalline thermoplastic resins.

Specific examples of the amorphous thermoplastic resin as another resin include polyethersulfone, polyphenylsulfone, amorphous polystyrene, acrylic resin, ABS resin, polyphenylene ether, polyarylate, polyamideimide, polyetherimide, thermoplastic amorphous polyimide, amorphous cycloolefin polymer, and amorphous cycloolefin copolymer.

Specific examples of the crystalline thermoplastic resin as another resin include polyethylene, polypropylene, polyvinyl alcohol, polymethylpentene, syndiotactic polystyrene, polyethylene terephthalate, polybutylene terephthalate, polyethylene naphthalate, polyamide, polyether ether ketone, polyacetal, a liquid crystal polymer, a crystalline cycloolefin polymer, a crystalline cycloolefin copolymer, and a fluororesin.

When another resin is contained in the amorphous thermoplastic resin film according to the first embodiment, the content is 40% by mass or less, preferably 30% by mass or less, more preferably 20% by mass or less, and still more preferably 15% by mass or less. The resin contained in the amorphous thermoplastic resin film according to the first embodiment may be substantially only the amorphous thermoplastic resin having a glass transition temperature (Tg) of 130°C or more and less than 200°C (for example, a proportion of the amorphous thermoplastic resin having a glass transition temperature (Tg) of 130°C or more and less than 200°C in the resin contained in the amorphous thermoplastic resin film is 99% by mass or more).

The silica is not particularly limited as long as the average particle size is in a range of 0.1 to 1.5 μm, a known silica can be used, and a commercially available silica can also be used. As the silica, synthetic amorphous silica having a preferable particle size is easily obtained, which is preferable. The shape of the silica is not particularly limited, the silica may be, for example, spherical silica including a single particle, amorphous silica forming a secondary particle and a tertiary particle from a plurality of primary particles, or the like, and the spherical silica including a single particle is preferable.

The calcium carbonate is not particularly limited as long as the average particle size is in a range of 0.1 μm or more and 1.5 μm or less, a known calcium carbonate can be used, and a commercially available calcium carbonate can also be used. As calcium carbonate, light calcium carbonate having a preferable particle size is easily obtained, which is preferable.

In the amorphous thermoplastic resin film according to the first embodiment, from the viewpoint of enhancing the dielectric breakdown strength at high temperature, reducing the thickness, and further enhancing the slit processing suitability, the average particle size of at least one kind of particles selected from the group consisting of silica and calcium carbonate is preferably 0.2 to 1.5 μm, more preferably 0.3 to 1.2 μm, and still more preferably 0.5 to 1.0 μm.

In the first embodiment, the average particle size of at least one kind of particles selected from the group consisting of silica and calcium carbonate is a value measured by the following method.

(Average particle size)

For the average particle size, an ultra-high resolution field emission scanning electron microscope ((FE-SEM) S-5200 manufactured by Hitachi High-Tech Corporation) is used, particles at 10 points (20 points on both sides) from one side of a film surface are observed at a magnification of 20,000 times, an acceleration voltage of 8 kV, and a beam current of 10 μA by using a reflected electron detector as a detector, and an observation image is acquired. The longest diameter is measured from the observation image using image analysis software, and the average particle size is obtained by averaging the measured values. In this method, particles at a position deeper than the film surface by about 3 μm or more are blurred, and therefore cannot be measured. However, since particles at such a deep position do not function as a lubricant, the particles are not measured in the first embodiment.

A proportion of the content of at least one kind of particles selected from the group consisting of silica and calcium carbonate (when both silica and calcium carbonate are contained, a total content of both silica and calcium carbonate) in the amorphous thermoplastic resin film of the first embodiment is not particularly limited as long as it is in a range of 0.1 to 1.5% by mass. In the amorphous thermoplastic resin film according to the first embodiment, from the viewpoint of enhancing the dielectric breakdown strength at high temperature, reducing the thickness, further enhancing

the slit processing suitability, and enhancing the continuous film forming properties, the proportion of the content is preferably 0.12 to 1.5% by mass, more preferably 0.2 to 1.2% by mass, still more preferably 0.2 to 1.0% by mass, and particularly preferably 0.2 to 0.7% by mass.

The thickness of the amorphous thermoplastic resin film according to the first embodiment may be 9.5 μm or less, and is preferably 9.0 μm or less, more preferably 8.5 μm or less, and still more preferably 6.0 μm or less from the viewpoint of reducing a volume of the capacitor and increasing the electrostatic capacitance. From the viewpoint of further enhancing the dielectric breakdown strength ($V_{DC}$) and the slit processing suitability and enhancing the continuous film forming properties, the lower limit of the thickness of the amorphous thermoplastic resin film according to the first embodiment is, for example, 1.5 μm, preferably 2.0 μm, and more preferably 2.5 μm.

A relationship among the thickness of the dielectric film, the volume of the capacitor, and the electrostatic capacitance will be described in detail below. As the thickness of the dielectric film decreases, the electrostatic capacitance per unit volume can be increased. More specifically, an electrostatic capacitance C of a flat capacitor is expressed as follows using a dielectric constant ε, an electrode area S, and a dielectric thickness d (thickness d of the resin film).

$$C = \varepsilon S/d$$

Here, in the case of a film capacitor, since the thickness of the electrode is thinner by more than three orders of magnitude than the thickness of the dielectric film, a volume V of the capacitor is expressed as follows when the volume of the electrode is ignored.

$$V = Sd$$

Therefore, from the above two formulas, an electrostatic capacitance C/V per unit volume is expressed as follows.

$$C/V = \varepsilon/d^2$$

Here, the dielectric constant ε is determined by a material to be used. Thus, as can be seen from the above formula, the electrostatic capacitance (C/V) per unit volume is improved in inverse proportion to the square when the resin film thickness is reduced as long as the material is not changed.

The above description is idealized for ease of understanding. That is, in practice, the value of the electrostatic capacitance (C/V) per unit volume changes depending on the area, for example, due to the fact that a slight gap is present between the films in some cases, the fact that there is an influence of a fringe effect at an electrode end, and the fact that the capacitor is a wound type capacitor. However, in general, it can be understood that the electrostatic capacitance (C/V) per unit volume is determined by the dielectric film thickness.

From the above, the thickness of the dielectric film is preferably as thin as possible within a range in which the dielectric breakdown strength ($V_{DC}$), the slit processing suitability, and the continuous film forming properties are secured.

The thickness of the amorphous thermoplastic resin film is a value measured in accordance with JIS K 7130: 1999A method using an outer micrometer (high-precision digimatic micrometer MDH-25MB manufactured by Mitutoyo Corporation).

The dielectric breakdown strength of the amorphous thermoplastic resin film according to the first embodiment in an environment at 125°C is preferably 300 $V_{DC}$/μm or more, more preferably 320 $V_{DC}$/μm or more, and further 350 $V_{DC}$/μm or more from the viewpoint of the dielectric breakdown strength at high temperature. The upper limit of the dielectric breakdown strength of the amorphous thermoplastic resin film according to the first embodiment in the environment at 125°C is not limited, and is, for example, 600 $V_{DC}$/μm. The dielectric breakdown strength in the environment of 125°C is a value measured by the following measurement method.

(Dielectric breakdown strength in environment at 125°C)

A measuring device according to 17.2.2 (plate electrode method) of JIS C2151: 2006 is prepared. However, as a lower electrode, conductive rubber (E12S10 manufactured by SEIWA ELECTRIC MFG CO. Ltd) is used as an electrode instead of an elastic body described in 17.2.2 of JIS C2151: 2006, and an aluminum foil is not wound. A measurement environment is an inside of a forced circulation oven at a set temperature of 125°C, and the electrode and the film are used after being temperature-controlled for 30 minutes in the oven. A voltage rise starts from 0 V, the voltage rise speed is 100 V/sec, and a time when a current value exceeds 5 mA is defined as a time of breakdown. The

number of times of dielectric breakdown voltage measurement is 20 times, the dielectric breakdown voltage value $V_{DC}$ is divided by the thickness (μm) of the film, and an average value of 16 points excluding the top 2 points and the bottom 2 points in the 20 calculation results is defined as the dielectric breakdown strength ($V_{DC}$/μm)

The dielectric breakdown strength of the amorphous thermoplastic resin film according to the first embodiment in an environment at 23°C is preferably 300 $V_{DC}$/μm or more, more preferably 320 $V_{DC}$/μm or more, and further 350 $V_{DC}$/μm or more. The upper limit of the dielectric breakdown strength of the amorphous thermoplastic resin film according to the first embodiment in the environment at 23°C is not limited, and is, for example, 650 $V_{DC}$/μm. The dielectric breakdown strength in the environment at 23°C is calculated by performing the same measurement as that at 125°C not in a forced circulation oven at a set temperature of 125°C but in an environment at 23°C and a relative humidity of 50%.

A ratio of the dielectric breakdown strength in the environment at 125°C to the dielectric breakdown strength in the environment at 23°C (dielectric breakdown strength in the environment at 125°C/dielectric breakdown strength in the environment at 23°C) is preferably 0.8 or more, more preferably 0.9 or more, still more preferably 0.95 or more, and particularly preferably 1.0 or more. The upper limit of the ratio is preferably 1.1 or less.

The amorphous thermoplastic resin film according to the first embodiment may be an unstretched film or a stretched film. From the viewpoint of further enhancing the slit processing suitability of the amorphous thermoplastic resin film according to the first embodiment and enhancing the continuous film forming properties, the unstretched film is preferable. On the other hand, the stretched film is preferable from the viewpoint of increasing the dielectric breakdown strength at high temperature and reducing the thickness. When the amorphous thermoplastic resin film is the stretched film, the stretched film may be a uniaxially stretched film or a biaxially stretched film.

The amorphous thermoplastic resin film according to the first embodiment may have a single layer or a multilayer. The single layer is preferable because the film thickness can be easily reduced. On the other hand, the multilayer is preferable because the effect can be easily obtained with a small addition amount by adding silica and/or calcium carbonate only to a surface layer and the dielectric breakdown strength easily increases. When the amorphous thermoplastic resin film according to the first embodiment has multiple layers, two or more layers of the same or different amorphous thermoplastic resin films may be stacked.

Although the amorphous thermoplastic resin film according to the first embodiment may be stacked on a base material formed of a metal foil such as an aluminum foil, another resin film, or the like, the amorphous thermoplastic resin film is preferably not formed on the base material, is produced as the amorphous thermoplastic resin film according to the first embodiment alone (preferably, after film formation, the film is singly wound around a winding core to form a wound body), and is preferably provided for production of a capacitor metalized film and a capacitor described later.

The amorphous thermoplastic resin film according to the first embodiment may contain an additive. The additive is not particularly limited as long as the effect of the present invention is not impaired, and an additive blended in a known amorphous thermoplastic resin film can be used. Examples of the additive include necessary stabilizers such as an antioxidant and a chlorine absorber, a lubricant (different from silica and calcium carbonate described above), a plasticizer, a flame retardant, and a colorant. The amorphous thermoplastic resin film according to the first embodiment can contain such an additive in an amount that does not adversely affect the amorphous thermoplastic resin film of the first embodiment. In the amorphous thermoplastic resin film according to the first embodiment, it is preferable not to use spherical crosslinked polymer resin particles such as silicone resin.

The "antioxidant" is not particularly limited as long as the amorphous thermoplastic resin film of the first embodiment can be obtained. The antioxidant is generally used for two purposes. One object is to suppress thermal degradation and oxidative degradation in an extruder, and another object is to contribute to suppression of degradation and improvement of capacitor performance in long-term use as a capacitor film.

The "chlorine absorber" is not particularly limited as long as the effect of the present invention is not impaired. When the chlorine absorber is used, chlorine derived from a polymerization catalyst and the like and contained in a small amount in the resin is captured, chlorination of a metal vapor deposition film described later is suppressed, and performance of the capacitor is easily improved. Examples of the chlorine absorber include metal soaps such as calcium stearate.

The "lubricant" is not particularly limited as long as the effect of the present invention is not impaired. Examples of the lubricant include various waxes such as primary amides (stearic acid amide and the like), secondary amides (N-stearyl stearic acid amide and the like), ethylene bisamide (N, N' -ethylenebis-stearic acid amide and the like), and polyethylene wax. In the amorphous thermoplastic resin film according to the first embodiment, since silica and calcium carbonate also function as a lubricant, it is preferable that a lubricant different from silica and calcium carbonate is substantially not contained (for example, a ratio of silica and calcium carbonate in the lubricant is 99% by mass or more).

The "plasticizer" is not particularly limited as long as the effect of the present invention is not impaired. Examples of the plasticizer include bis(2-ethylhexyl) phthalate.

The "flame retardant" is not particularly limited as long as the effect of the present invention is not impaired. Examples of the flame retardant include halogen compounds, aluminum hydroxide, magnesium hydroxide, phosphates, borates, and antimony oxides.

The "colorant" is not particularly limited as long as the effect of the present invention is not impaired. Examples

of the colorant include inorganic colorants such as titanium dioxide, carbon black, talc, a chromium compound, and zinc sulfide, and organic colorants such as azo-based, quinacridone-based, and phthalocyanine-based colorants.

Since the amorphous thermoplastic resin film of the first embodiment has a small thickness of 9.5 μm or less and has high dielectric breakdown strength at high temperature, the amorphous thermoplastic resin film can be used in a high-temperature environment, and can be extremely suitably used for small-sized capacitors and, in addition, for capacitors with high capacitance (for example, 5 μF or more, preferably 10 μF or more, more preferably 20 μF or more).

The amorphous thermoplastic resin film of the first embodiment can be produced by forming a resin composition, containing an amorphous thermoplastic resin having a glass transition temperature (Tg) of 130°C or more and less than 200°C and at least one kind of particles selected from the group consisting of silica and calcium carbonate and having an average particle size of 0.1 μm or more and 1.5 μm or less, in a range of 0.1 to 1.5% by mass, into a film shape having a thickness of 9.5 μm.

The details of the amorphous thermoplastic resin having a glass transition temperature (Tg) of 130°C or more and less than 200°C and the particles having an average particle size of 0.1 μm or more and 1.5 μm or less are as described above.

The method of forming the resin composition into a film shape having a thickness of 9.5 μm is not particularly limited, and a known film forming method can be adopted. Examples thereof include a method in which a resin composition supplied to an extruder is brought into a molten state by heating, filtered through a filter, then extruded into a film shape using a T-die, and brought into contact with a roll set at a predetermined surface temperature to be solidified, and thus to be formed. After the resin composition is formed into a film shape, the film is wound around a winding core, whereby the amorphous thermoplastic resin film of the first embodiment can be formed into a wound body (film roll).

The composition of the resin composition can also be adjusted by mixing a plurality of resin compositions (resin mixing). For example, by mixing an amorphous thermoplastic resin in which at least one kind of particles selected from the group consisting of silica and calcium carbonate is blended with an amorphous thermoplastic resin in which the particles are not blended, the content of the particles in the resin composition can be adjusted to 0.1 to 1.5% by mass based on 100% by mass of the resin composition.

The method of mixing a plurality of resin compositions is not particularly limited, examples thereof include a method of dry-blending pellets of a plurality of resin compositions using a mixer or the like, and a method of supplying pellets of a plurality of resin compositions to a kneader and melt-kneading the pellets to obtain a blended resin, and any one of these methods may be used.

There are no particular limitations on the mixer or kneader, and a single-screw type, two-screw type or multi-screw type having a larger number of screws may be used. Moreover, in the case of using a type having two or more screws, the type of kneading may be that in which the screws rotate in the same direction or different directions.

In the case of blending by melting and kneading, although there are no particular limitations on the kneading temperature provided favorable kneading is obtained, in general, it is within a range of 230°C to 400°C, preferably 280°C to 350°C, and more preferably 290 to 340°C. In order to inhibit resin deterioration during kneading and mixing, the kneader may be purged with an inert gas such as nitrogen.

An extrusion temperature at the time of forming the resin composition into a film shape in the molten state and a surface temperature of a cooling roll are appropriately adjusted according to the glass transition temperature (Tg) of the amorphous thermoplastic resin and the like. The extrusion temperature is, for example, 230 to 400°C, preferably 280 to 350°C, and more preferably about 290 to 340°C. The surface temperature of the cooling roll is, for example, 80 to 230°C, preferably 100 to 160°C, and more preferably about 110 to 150°C.

As an adhesion method for bringing the resin composition in the molten state into contact with the cooling roll and solidifying the resin composition, known methods such as air knife, electrostatic pinning, elastic roll nip, metal roll nip, and elastic metal roll nip can be used.

When the amorphous thermoplastic resin film of the first embodiment is formed into a stretched film, the resin composition is formed into a film shape, and then the film is further stretched. A stretch ratio is not particularly limited, and is about 1.1 to 4.0 in an MD direction and about 1.1 to 4.0 in a TD direction. As described above, the stretched film may be a uniaxially stretched film or a biaxially stretched film.

A temperature during stretching is appropriately adjusted according to the glass transition temperature (Tg) of the amorphous thermoplastic resin and the like. The stretching temperature is, for example, about 100 to 270°C.

From the viewpoint of improving thickness accuracy after stretching, a range of Tg +2°C to Tg +70°C or a range of Tg -90°C to Tg -2°C is preferable, and a range of Tg +5°C to Tg +65°C or a range of Tg -80°C to Tg -5°C is more preferable. That is, a preferred temperature during stretching may be in a temperature range higher than the glass transition temperature or in a temperature range lower than the glass transition temperature.

The film after stretching may be subjected to an annealing treatment for the purpose of relaxing residual stress, adjusting a thermal shrinkage rate, and the like, and the temperature thereof is preferably in a range of Tg -1°C to Tg -60°C, and more preferably in a range of Tg -3°C to Tg -50°C. In addition to the annealing treatment, a relaxation treatment for reducing the stretch ratio may be performed.

2. Amorphous thermoplastic resin film according to second embodiment

The amorphous thermoplastic resin film according to the second embodiment includes a film containing an amorphous thermoplastic resin and at least one kind of particles selected from the group consisting of silica and calcium carbonate. Specifically, the amorphous thermoplastic resin film according to the second embodiment is a resin film in which particles of at least one of silica and calcium carbonate are dispersed in the amorphous thermoplastic resin as a base resin.

The amorphous thermoplastic resin has a glass transition temperature (Tg) of 170°C or more and 230°C or less and has a sulfonyl group ($-SO_2-$) in the main chain. The glass transition temperature is preferably 175 to 225°C, more preferably 180 to 222°C, still more preferably 180 to 200°C, and particularly preferably 180 to 190°C from the viewpoint of suitably exhibiting the characteristics of having high dielectric breakdown strength at high temperature, being thin, and being excellent in slit processing suitability, and enhancing the continuous film forming properties of the amorphous thermoplastic resin film (specifically, increasing a length by which the film can be formed without breakage).

In the second embodiment, the glass transition temperature (Tg) is a value measured using a differential scanning calorimeter (DSC), and specifically, is measured by a method described in Examples.

In the second embodiment, the term "amorphous thermoplastic resin" is the same as that described in the "first embodiment". Specific examples of the amorphous thermoplastic resin having a sulfonyl group ($-SO_2-$) in the main chain include polysulfone, polyethersulfone, and polyphenylsulfone and the like.

The amorphous thermoplastic resin is preferably an amorphous thermoplastic resin having a repeating unit represented by Formula: $-[Ph-C(CH_3)_2-Ph]-$ in the main chain from the viewpoint of suitably exhibiting the characteristics of having high dielectric breakdown strength at high temperature, being thin, and being excellent in slit processing suitability.

Formula: $-[Ph-C(CH_3)_2-Ph]-$ is represented by the chemical formula described in the "first embodiment".

The amorphous thermoplastic resin contained in the amorphous thermoplastic resin film may be one kind or two or more kinds.

The polysulfone is not particularly limited, a known polysulfone can be used, and a commercially available polysulfone can also be used. Examples of commercially available products of polysulfone include the same as those exemplified in the "first embodiment".

The glass transition temperature (Tg) of polysulfone may be in the range of 170°C or more and 230°C or less, and is preferably 160 to 195°C, more preferably 170 to 190°C, and still more preferably 180 to 190°C. A mass (weight) average molecular weight of polysulfone is not particularly limited, and is, for example, about 10,000 to 100,000, preferably about 15,000 to 80,000. The MVR (melt volume-flow rate) of polysulfone is preferably 50 $cm^3$/10 min or less, and more preferably 35 $cm^3$/10 min or less. The lower limit of the MVR is, for example, 20 $cm^3$/10 min.

In the second embodiment, the mass (weight) average molecular weight of the resin is a value measured by the same method as the method described in the "first embodiment".

The polyethersulfone is not particularly limited, a known polyethersulfone can be used, and a commercially available polyethersulfone can also be used. Examples of commercially available products of polyethersulfone include product name: Ultrason (registered trademark) (for example, Ultrason (registered trademark) E2010, Ultrason (registered trademark) E3010) manufactured by BASF SE.

The glass transition temperature (Tg) of polyethersulfone may be in the range of 170°C or more and 230°C or less, and is preferably 200 to 230°C, more preferably 210 to 230°C, and still more preferably 220 to 230°C. A mass (weight) average molecular weight of polyethersulfone is not particularly limited, and is, for example, about 10,000 to 100,000, preferably about 15,000 to 80,000.

The polyphenylsulfone is not particularly limited, a known polyphenylsulfone can be used, and a commercially available polyphenylsulfone can also be used. Examples of commercially available products of polyphenylsulfone include product name: Ultrason (registered trademark) (for example, Ultrason (registered trademark) P3010) manufactured by BASF SE, and product name: Radel (registered trademark) (for example, Radel (registered trademark) R-5100) manufactured by Solvey.

The glass transition temperature (Tg) of polyphenylsulfone may be in the range of 170°C or more and 230°C or less, and is preferably 195 to 225°C, more preferably 205 to 225°C, and still more preferably 215 to 225°C. A mass (weight) average molecular weight of polyphenylsulfone is not particularly limited, and is, for example, about 10,000 to 100,000, preferably about 15,000 to 80,000.

A content of the amorphous thermoplastic resin in the amorphous thermoplastic resin film according to the second embodiment is, for example, 55% by mass or more, preferably 60 to 99.9% by mass, more preferably 65 to 99.5% by mass, and still more preferably 70 to 99.0% by mass.

The amorphous thermoplastic resin film according to the second embodiment may contain another resin different from the amorphous thermoplastic resin having a glass transition temperature (Tg) of 170°C or more and 230°C or less and having a sulfonyl group in the main chain as long as the effect of the present invention is not impaired. Examples

of such another resin include amorphous thermoplastic resins having a glass transition temperature (Tg) of less than 170°C, amorphous thermoplastic resins having a glass transition temperature (Tg) of more than 230°C, amorphous thermoplastic resins having a glass transition temperature (Tg) of 170°C or more and 230°C or less and not having a sulfonyl group in the main chain, and crystalline thermoplastic resins.

Specific examples of the amorphous thermoplastic resin as another resin include polycarbonate, amorphous polystyrene, acrylic resin, ABS resin, polyphenylene ether, polyarylate, polyamideimide, polyetherimide, thermoplastic amorphous polyimide, amorphous cycloolefin polymer, and amorphous cycloolefin copolymer.

Specific examples of crystalline thermoplastic resin as another resin include the same as those exemplified in the "first embodiment".

When another resin is contained in the amorphous thermoplastic resin film according to the second embodiment, the content is 40% by mass or less, preferably 30% by mass or less, more preferably 20% by mass or less, and still more preferably 15% by mass or less. The resin contained in the amorphous thermoplastic resin film according to the second embodiment may be substantially only the amorphous thermoplastic resin having a glass transition temperature (Tg) of 170°C or more and 230°C or less and having a sulfonyl group in the main chain (for example, a proportion of the amorphous thermoplastic resin having a glass transition temperature (Tg) of 170°C or more and 230°C or less in the resin contained in the amorphous thermoplastic resin film and having a sulfonyl group in the main chain is 99% by mass or more).

The silica is not particularly limited as long as the average particle size is in a range of 0.1 to 1.5 μm, a known silica can be used, and a commercially available silica can also be used. As the silica, synthetic amorphous silica having a preferable particle size is easily obtained, which is preferable. The shape of the silica is not particularly limited, and examples thereof include the same as those exemplified in the "first embodiment".

The calcium carbonate is not particularly limited as long as the average particle size is in a range of 0.1 μm or more and 1.5 μm or less, a known calcium carbonate can be used, and a commercially available calcium carbonate can also be used. As calcium carbonate, light calcium carbonate having a preferable particle size is easily obtained, which is preferable.

In the amorphous thermoplastic resin film according to the second embodiment, from the viewpoint of enhancing the dielectric breakdown strength at high temperature, reducing the thickness, and further enhancing the slit processing suitability, the average particle size of at least one kind of particles selected from the group consisting of silica and calcium carbonate is preferably 0.2 to 1.5 μm, more preferably 0.3 to 1.2 μm, and still more preferably 0.5 to 1.0 μm.

In the second embodiment, the average particle size of at least one kind of particles selected from the group consisting of silica and calcium carbonate is a value measured by the method described in the "first embodiment".

The proportion of the content of at least one kind of particles selected from the group consisting of silica and calcium carbonate (when both silica and calcium carbonate are contained, the total content of both silica and calcium carbonate) in the amorphous thermoplastic resin film of the second embodiment is not particularly limited as long as it is in a range of 0.1 to 1.5% by mass, and the preferred range is also the same as the range exemplified in the "first embodiment".

The thickness of the amorphous thermoplastic resin film according to the second embodiment may be 9.5 μm or less, and the preferred examples thereof include the same as those exemplified in the "first embodiment".

The relationship among the thickness of the dielectric film, the volume of the capacitor, and the electrostatic capacitance is as described in detail in the "first embodiment".

The thickness of the amorphous thermoplastic resin film is a value measured by the method described in detail in the "first embodiment".

The dielectric breakdown strength of the amorphous thermoplastic resin film according to the second embodiment in the environment at 125°C is preferably 300 $V_{DC}$/μm or more, more preferably 320 $V_{DC}$/μm or more, further 350 $V_{DC}$/μm or more, and particularly 400 $V_{DC}$/μm or more from the viewpoint of the dielectric breakdown strength at high temperature. The upper limit of the dielectric breakdown strength of the amorphous thermoplastic resin film according to the second embodiment in the environment at 125°C is not limited, and is, for example, 600 $V_{DC}$/μm. The dielectric breakdown strength in the environment of 125°C is a value measured by the measurement method described in the "first embodiment".

The dielectric breakdown strength of the amorphous thermoplastic resin film according to the second embodiment in an environment at 140°C is preferably 300 $V_{DC}$/μm or more, more preferably 320 $V_{DC}$/μm or more, and further 350 $V_{DC}$/μm or more from the viewpoint of the dielectric breakdown strength at high temperature. The upper limit of the dielectric breakdown strength of the amorphous thermoplastic resin film according to the second embodiment in the environment at 140°C is not limited, and is, for example, 600 $V_{DC}$/μm. The dielectric breakdown strength in the environment at 140°C is measured and calculated in the same manner as the dielectric breakdown strength in the environment at 125°C except that the measurement environment is an inside of a forced circulation oven at a set temperature of 140°C.

The dielectric breakdown strength of the amorphous thermoplastic resin film according to the second embodiment in an environment at 23°C is preferably 300 $V_{DC}$/μm or more, more preferably 320 $V_{DC}$/μm or more, and further

350 $V_{DC}/\mu m$ or more. The upper limit of the dielectric breakdown strength of the amorphous thermoplastic resin film according to the second embodiment in the environment at 23°C is not limited, and is, for example, 650 $V_{DC}/\mu m$. The dielectric breakdown strength in the environment at 23°C is calculated by performing the same measurement as that at 125°C not in a forced circulation oven at a set temperature of 125°C but in an environment at 23°C and a relative humidity of 50%.

The amorphous thermoplastic resin film according to the second embodiment may be an unstretched film or a stretched film. From the viewpoint of further enhancing the slit processing suitability of the amorphous thermoplastic resin film according to the second embodiment and enhancing the continuous film forming properties, the unstretched film is preferable. On the other hand, the stretched film is preferable from the viewpoint of increasing the dielectric breakdown strength at high temperature and reducing the thickness. When the amorphous thermoplastic resin film is the stretched film, the stretched film may be a uniaxially stretched film or a biaxially stretched film.

The amorphous thermoplastic resin film according to the second embodiment may have a single layer or a multilayer. The single layer is preferable because the film thickness can be easily reduced. On the other hand, the multilayer is preferable because the effect can be easily obtained with a small addition amount by adding silica and/or calcium carbonate only to a surface layer and the dielectric breakdown strength easily increases. When the amorphous thermoplastic resin film according to the second embodiment has multiple layers, two or more layers of the same or different amorphous thermoplastic resin films may be stacked.

Although the amorphous thermoplastic resin film according to the second embodiment may be stacked on a base material formed of a metal foil such as an aluminum foil, another resin film, or the like, the amorphous thermoplastic resin film is preferably not formed on the base material, is produced as the amorphous thermoplastic resin film according to the second embodiment alone (preferably, after film formation, the film is singly wound around a winding core to form a wound body), and is preferably provided for production of a capacitor metalized film and a capacitor described later.

The amorphous thermoplastic resin film according to the second embodiment may contain an additive. The description of the additive is the same as that of the "first embodiment".

Since the amorphous thermoplastic resin film of the second embodiment has a small thickness of 9.5 μm or less and has high dielectric breakdown strength at high temperature, the amorphous thermoplastic resin film can be used in a high-temperature environment, and can be extremely suitably used for a small-sized and high-capacity capacitor (for example, 5 μF or more, preferably 10 μF or more, more preferably 20 μF or more).

The amorphous thermoplastic resin film of the second embodiment can be produced by forming a resin composition, containing, in a range of 0.1 to 1.5% by mass, an amorphous thermoplastic resin having a glass transition temperature (Tg) of 170°C or more and 230°C or less and having a sulfonyl group in the main chain and at least one kind of particles selected from the group consisting of silica and calcium carbonate and having an average particle size of 0.1 μm or more and 1.5 μm or less, into a film shape having a thickness of 9.5 μm.

The details of the amorphous thermoplastic resin having a glass transition temperature (Tg) of 170°C or more and 230°C or less and having a sulfonyl group in the main chain and the particles having an average particle size of 0.1 μm or more and 1.5 μm or less are as described above.

The method of forming the resin composition into a film shape having a thickness of 9.5 μm is not particularly limited, and is the same as the method in the "first embodiment".

The composition of the resin composition can also be adjusted by mixing a plurality of resin compositions (resin mixing). For example, by mixing an amorphous thermoplastic resin in which at least one kind of particles selected from the group consisting of silica and calcium carbonate is blended with an amorphous thermoplastic resin in which the particles are not blended, the content of the particles in the resin composition can be adjusted to 0.1 to 1.5% by mass based on 100% by mass of the resin composition.

A method of mixing a plurality of resin compositions is not particularly limited, and is the same as the method in the "first embodiment".

An extrusion temperature at the time of forming the resin composition into a film shape in the molten state and a surface temperature of a cooling roll are appropriately adjusted according to the glass transition temperature (Tg) of the amorphous thermoplastic resin and the like. The extrusion temperature is, for example, 230 to 400°C, preferably 310 to 380°C, and more preferably about 320 to 370°C. The surface temperature of the cooling roll is, for example, 80 to 230°C, preferably 120 to 190°C, and more preferably about 130 to 180°C.

The adhesion method for bringing the resin composition in the molten state into contact with the cooling roll and solidifying the resin composition is the same as the method in the "first embodiment".

When the amorphous thermoplastic resin film of the second embodiment is formed into a stretched film, the resin composition is formed into a film shape, and then the film is further stretched. The stretch ratio is the same as the example in the "first embodiment". As described above, the stretched film may be a uniaxially stretched film or a biaxially stretched film.

A temperature during stretching is appropriately adjusted according to the glass transition temperature (Tg) of the amorphous thermoplastic resin and the like. The stretching temperature is, for example, about 100 to 270°C.

From the viewpoint of improving thickness accuracy after stretching, a range of Tg +2°C to Tg +70°C or a range of Tg -90°C to Tg -2°C is preferable, and a range of Tg +5°C to Tg +65°C or a range of Tg -80°C to Tg -5°C is more preferable. That is, a preferred temperature during stretching may be in a temperature range higher than the glass transition temperature or in a temperature range lower than the glass transition temperature.

The film after stretching may be subjected to an annealing treatment for the purpose of relaxing residual stress, adjusting a thermal shrinkage rate, and the like, and the temperature thereof is preferably in a range of Tg -1°C to Tg -60°C, and more preferably in a range of Tg -3°C to Tg -50°C. In addition to the annealing treatment, a relaxation treatment for reducing the stretch ratio may be performed.

3. Capacitor metalized film

The capacitor metalized film according to the present embodiment has a metal film on one side or both sides of the amorphous thermoplastic resin film according to the first embodiment or the second embodiment.

Each of the amorphous thermoplastic resin films of the first embodiment and the second embodiment can be provided with a metal film as an electrode on one side or both sides in order to be processed as a capacitor. Such an electrode is not particularly limited as long as the capacitor intended by the present invention can be obtained, and an electrode usually used for manufacturing a capacitor can be used.

Since the capacitor is further required to be reduced in size and weight, it is preferable that an electrode is formed (metalized) directly on one side or both sides of the resin film of the first embodiment or the second embodiment to form a metalized film.

As a method of metallizing the surface of the resin film of the first embodiment or the second embodiment, for example, a metal layer (electrode) is provided by a method such as vacuum plating such as vacuum vapor deposition or sputtering, coating/drying of a metal-containing paste, or pressure bonding of a metal foil or metal powder. Among them, the vacuum vapor deposition method and the sputtering method are preferable in order to respond to the further demand for size and weight reduction of the capacitor, and the vacuum vapor deposition method is preferable from the viewpoint of productivity, economical efficiency, and the like. As the vacuum vapor deposition method, generally, a crucible method, a wire method, or the like can be exemplified, the vacuum vapor deposition method is not particularly limited as long as the capacitor intended by the present invention can be obtained, and an optimum method can be appropriately selected.

As the metal used for the electrode, for example, elementary metals, such as zinc, lead, silver, chromium, aluminum, copper, and nickel, mixtures of multiple types of these metals, alloys thereof, and the like can be used, and in consideration of environment, economical efficiency, capacitor performance, and the like, zinc and aluminum are preferable.

Film resistance of the metal vapor deposition film is preferably about 1 to 100 Ω/□ from the viewpoint of electrical characteristics of the capacitor. Even within this range, the film resistance is desirably high from the viewpoint of self-healing (self-repairing) characteristics, and the film resistance is more preferably 5 Ω/□ or more, and still more preferably 10 Ω/□ or more. From the viewpoint of safety as a capacitor, the film resistance is more preferably 50 Ω/□ or less, and still more preferably 30 Ω/□ or less. When an electrode (metal vapor deposition film) is formed by a vacuum deposition method, the film resistance can be measured during metal deposition by, for example, a four-terminal method known to those skilled in the art. The film resistance of the metal vapor deposition film can be adjusted, for example, by adjusting an output of an evaporation source to adjust an evaporation amount.

When a metal vapor deposition film is formed on one side of the amorphous thermoplastic resin film of the first embodiment or the second embodiment, an insulating margin is formed without vapor-depositing a certain width from one end of the film so as to serve as a capacitor when the film is wound In addition, in order to strengthen bonding between the capacitor metalized film and a metalicon electrode, a heavy edge structure is preferably formed on the other edge relative to the insulating margin, and the film resistance of the heavy edge is typically about 1 to 8 Ω/□ and preferably about 1 to 5 Ω/□. A thickness of a metal film of the heavy edge is not particularly limited, and is preferably 1 to 200 nm.

Although a deposition pattern (margin pattern) of the metal vapor deposition film to be formed is not particularly limited, from the viewpoint of improving characteristics such as safety of the capacitor, a fuse is preferably formed as a pattern containing a so-called special margin such as a fishnet pattern or T-margin pattern. When the metal vapor deposition film is formed in a deposition pattern containing the special margin on at least one side of the amorphous thermoplastic resin film of the first embodiment or the second embodiment, the safety of the resulting capacitor is enhanced, and it is effective from the viewpoint of suppressing breakage and short circuit of the capacitor, which is preferable.

As the method of forming the margin, conventionally known methods, such as a tape method in which masking is performed using tape during deposition, and an oil method in which masking is performed by applying oil, can be used without any restrictions.

A protective layer may be provided on the metalized film of the present embodiment for the purpose of physical protection, moisture absorption prevention, oxidation prevention, and the like of the metal vapor deposition film. As the protective layer, silicone oil, fluorine oil, or the like can be preferably used.
The metalized film of the present embodiment can be processed into the capacitor of the present embodiment described later.

4. Capacitor

The capacitor according to the present embodiment includes the amorphous thermoplastic resin film and/or the metalized film of the first embodiment or the second embodiment.
In such a capacitor, the film of the present invention can constitute, as the dielectric film for capacitors, a capacitor by, for example, (i) a method using the metalized film described above, (ii) a method of stacking the film of the present invention provided with no electrode and another conductor (for example, a metal foil, the film of the present invention in which one side or both sides are metalized, paper and other plastic films in which one side or both sides are metalized, and the like), or another method.
In the step of producing a capacitor, winding processing of the film is performed. For example, a pair of two metalized films of the present embodiment is overlaid and wound around such that the metal film in the metalized film of the present embodiment and the amorphous thermoplastic resin film of the first embodiment or the second embodiment are alternately stacked and that an insulating margin portion is located on the other side. At this time, a pair of the two metalized films of the present embodiment is preferably stacked such that the positions are shifted by 1 to 2 mm. Alternatively, a non-metalized amorphous thermoplastic resin film and another conductor such as a metal foil or another metalized film may be stacked. A winder to be used is not particularly limited, and, for example, the Automatic Winder model 3KAW-N2, manufactured by Kaido Mfg. Co., Ltd., or the like can be used. The winding processing of the film is not limited to the above method, and as another method, for example, the film of the present embodiment deposited on both sides (in this case, the heavy edges are arranged at ends on opposite sides of the front side and the back side) and the film of the present embodiment that is not deposited (having a width narrower by 2 to 3 mm than the width of the film of the present embodiment deposited on both sides) may be alternately stacked and wound.
When a flat capacitor is produced, after the winding, typically, the obtained wound product is subjected to pressing. Tightening of the winding of the capacitor and/or formation of the element is promoted by the pressing. From the viewpoint of controlling and/or stabilizing gaps between layers, the applied pressure is, for example, 2 to 20 $kg/cm^2$, although the optimum value varies depending on the thickness of the amorphous thermoplastic resin film of the first embodiment or the second embodiment.
Subsequently, a capacitor is produced by forming metalicon electrodes by subjecting both end faces of the wound product to metal thermal spraying.
The capacitor is further subjected to predetermined heat treatment. That is, in the present embodiment, there is included a step of performing heat treatment on the capacitor in the atmosphere or under vacuum at a temperature of 80 to 190°C for 1 hour or longer within a range not exceeding Tg of the amorphous thermoplastic resin (hereinafter, also referred to as "heat aging").
In the step of performing heat treatment on the capacitor described above, the temperature of the heat treatment is preferably in a range lower by 10°C to 100°C than Tg of the amorphous thermoplastic resin, and more preferably in a range lower by 15°C to 80°C. The effect of heat aging can be achieved by performing the heat treatment at the temperature described above. Specifically, corona discharge is suppressed by reducing gaps between films constituting the capacitor based on the metalized film of the present embodiment. Alternatively, distortion (internal stress) of the amorphous thermoplastic resin film is eliminated. As a result, it is considered that a withstand voltage is improved. When the temperature of the heat treatment is lower than a predetermined temperature, the above-described effect by thermal aging cannot be sufficiently obtained. On the other hand, when the temperature of the heat treatment is higher than the predetermined temperature, pyrolysis, oxidative degradation, or the like may occur in the amorphous thermoplastic resin film.
As the method of performing the heat treatment on the capacitor, for example, the method can be appropriately selected from known methods, such as a method that uses a thermostatic chamber or a method that uses a high frequency induction heating in a vacuum atmosphere. Specifically, the method that uses a thermostatic chamber is preferably employed.
The duration of the heat treatment is preferably 1 hour or longer, and more preferably 10 hours or longer, from the perspective of achieving mechanical and thermal stability; however, from the viewpoint of preventing formation failure, such as wrinkles caused by heat and embossing failure, the duration is more preferably 72 hours or shorter.
Typically, lead wires are bonded to the metalicon electrodes of the capacitor that has undergone the heat aging. The bonding method is not particularly limited, and bonding can be performed by, for example, welding, ultrasonic welding, and soldering. Furthermore, to impart weatherability, especially to inhibit degradation by moisture, the capacitor

is preferably sealed in a case and potted in an epoxy resin.

As described above, since the amorphous thermoplastic resin film of the first embodiment or the second embodiment has a small thickness of 9.5 μm or less and has high dielectric breakdown strength at high temperature, the amorphous thermoplastic resin film can be used in a high-temperature environment, and can be extremely suitably used for a small-sized and high-capacity capacitor (for example, 5 μF or more, preferably 10 μF or more, more preferably 20 μF or more). That is, the capacitor of the present embodiment using the amorphous thermoplastic resin film of the first embodiment or the second embodiment is suitably used in a high-temperature environment, and can be a small-sized and high-capacity capacitor. Therefore, the capacitor of the present embodiment can be used as high voltage capacitors, filter capacitors for various switching regulators, converters, inverters, and the like, smoothing capacitors, and the like used in electronic and electric devices and the like. Furthermore, the capacitor of the present embodiment can be suitably used as capacitors for inverter power supplies that regulate drive motors of electric cars, hybrid cars, and the like which have been increasingly in demand in recent years.

EXAMPLES

Hereinafter, the present invention will be described in detail with reference to Examples and Comparative Examples. However, the present invention is not limited to Examples. Unless otherwise specified, part and % respectively represent "part by mass" and "% by mass".

[Measurement method and evaluation method]

Various measurement methods and evaluation methods in Examples 1A to 14A and Comparative Examples 1A to 11A are as follows.

(1) Glass transition temperature (Tg)

The glass transition temperature was calculated by the following procedure using input-compensation type DSC and Diamond DSC manufactured by PerkinElmer Co., Ltd. 5 mg of each resin was weighed, packed in an aluminum sample holder, and set in a DSC apparatus. Under a nitrogen stream, the temperature was raised from 30°C to 300°C at a rate of 20°C/min, the resin was held at 300°C for 5 minutes, cooled to 30°C at 20°C/min, and held at 30°C for 5 minutes. Thereafter, the glass transition temperature was determined from a DSC curve when the temperature was raised again to 300°C at 20°C/min. A midpoint glass transition temperature defined in 9.3 (1) of JIS K7121: 1987 was defined as the glass transition temperature.

(2) Film thickness

The film thickness was measured in accordance with JIS K 7130: 1999A method using an outer micrometer (high-precision digimatic micrometer MDH-25MB manufactured by Mitutoyo Corporation).

(3) Dielectric breakdown strength

(Dielectric breakdown strength in environment at 125°C)

A measuring device according to 17.2.2 (plate electrode method) of JIS C2151: 2006 is prepared. However, as a lower electrode, conductive rubber (E12S10 manufactured by SEIWA ELECTRIC MFG CO. Ltd) is used as an electrode instead of an elastic body described in 17.2.2 of JIS C2151: 2006, and an aluminum foil is not wound. A measurement environment is an inside of a forced circulation oven at a set temperature of 125°C, and the electrode and the film are used after being temperature-controlled for 30 minutes in the oven. A voltage rise starts from 0 V, the voltage rise speed is 100 V/sec, and a time when a current value exceeds 5 mA is defined as a time of breakdown. The number of times of dielectric breakdown voltage measurement is 20 times, the dielectric breakdown voltage value $V_{DC}$ is divided by the thickness (μm) of the film, and an average value of 16 points excluding the top 2 points and the bottom 2 points in the 20 calculation results is defined as the dielectric breakdown strength ($V_{DC}$/μm)

(Dielectric breakdown strength in environment at 23°C)

The dielectric breakdown strength in the environment at 23°C is calculated by performing the same measurement as that at 125°C not in a forced circulation oven at a set temperature of 125°C but in an environment at 23°C and a relative humidity of 50%.

(4) Slit processing suitability

A winding having a width of 350 mm or more was slit at a slit speed of 50 m/min so as to have a width of 30 mm and a length of 500m, and the winding was divided into 10 small windings in a width direction except for the ears on both sides. For the small winding, a state of misalignment and wrinkles of an end surface was confirmed, and a winding in which the misalignment on the end surface was 2 mm or more or there were wrinkles at a level at which a folded trace did not disappear when the winding was rewound and confirmed (however, those within 100 m from the winding core were excluded) was defined as a NG small winding. The slit processing suitability was evaluated according to the following criteria based on the number of NG small windings among the 10 obtained small windings.

<Criteria>

⊙: The number of NG small windings is 0, and the slit processing suitability is very high
○: The number of NG small windings is 1 to 5, and the slit processing suitability is high
△: The number of NG small windings is 6 to 8, and the slit processing suitability is low
×: The number of NG small windings is 9 to 10, and the slit processing suitability is very low

(5) Continuous film forming properties

Film formation was performed under the conditions described in each Example, and the continuous film forming properties were evaluated according to the following criteria from a film formation length by which a film can be formed without breakage.

⊙: The film formation length is 1000 m or more, and the continuous film forming properties are very high
○: The film formation length is 500 m or more and less than 1000 m, and the continuous film forming properties are high
△: The film formation length is 250 m or more and less than 500 m, and the continuous film forming properties are slightly low
×: The film formation length is less than 250 m, and the continuous film forming properties are low

(6) Roll diameter

Two films obtained in each Example/Comparative Example were stacked and wound by a length of 30 m (a total length of 60 m was used because the two films were stacked) around a cylindrical winding core (diameter of circular diameter cross section was 12 mm) to form a roll shape. Diameters of both side surfaces of the roll (longest diameter when the side surface is not a perfect circle) were measured, and an average value of the measured values was taken as a roll diameter. As the roll diameter is smaller, a smaller capacitor having a large electrostatic capacitance (that is, large electrostatic capacitance per unit volume) as a capacitor using a dielectric film having a comparable relative permittivity can be produced when the film is used for the film capacitor, which is preferable.

Roll diameter of less than 30 mm: suitable for small capacitors.
Roll diameter of 30 mm or more: not suitable for small capacitors.

(7) (Average particle size)

For the average particle size, an ultra-high resolution field emission scanning electron microscope ((FE-SEM) S-5200 manufactured by Hitachi High-Tech Corporation) is used, particles at 10 points (20 points on both sides) from one side of a film surface are observed at a magnification of 20,000 times, an acceleration voltage of 8 kV, and a beam current of 10 μA by using a reflected electron detector as a detector, and an observation image is acquired. The longest diameter is measured from the observation image using image analysis software, and the average particle size is obtained by averaging the measured values. In this method, particles at a position deeper than the film surface by about 3 μm or more are blurred, and therefore cannot be measured. However, since particles at such a deep position do not function as a lubricant, the particles are not measured in the first embodiment and the second embodiment.

[Example 1A]

[Production of masterbatch]

As an amorphous thermoplastic resin, a dry blended material obtained by weighing and mixing a commercially available polysulfone (PSU) resin [manufactured by BASF Japan Ltd.: trade name Ultrason (registered trademark) S6010, glass transition temperature 187°C] and silica spherical fine particles having an average particle size of 1.0 μm [manufactured by Nippon Shokubai Co., Ltd.: trade name Seahostar (registered trademark) KE-P100] at a mass ratio of (resin): (fine particles) = 90: 10 was supplied to an extruder, melted at a resin temperature of 330°C, and then extruded using a strand die. The strand was cooled and then cut into pellets to produce a masterbatch. The MVR (Melt volume-flow rate) of a polysulfone (PSU) resin [manufactured by BASF Japan Ltd.: trade name Ultrason (registered trademark) S6010] measured under conditions of a temperature of 360°C and a load of 10 kg in accordance with the provisions of ISO 1133 was 30 $cm^3$/10 min.

[Production of unstretched film]

A dry blended material (content of silica spherical fine particles in the dry blended material was 0.5% by mass) obtained by weighing and mixing a polysulfone (PSU) resin [manufactured by BASF Japan Ltd.: trade name Ultrason (registered trademark) S6010, glass transition temperature 187°C] and a masterbatch at a mass ratio of (resin): (masterbatch) = 95: 5 was supplied to an extruder, melted at a resin temperature of 330°C, then passed through a filter having a mesh size of 5 μm, extruded using a T-die, and brought into contact with a mirror surface metal roll (cooling roll) having a surface temperature maintained at 140°C by electrostatic pinning, to be solidified, and thus to be formed into a film shape, and the film was wound up. At this time, an extrusion amount and a take-up speed were adjusted so that the thickness was 8.0 μm, thereby obtaining an amorphous thermoplastic resin film.

[Example 2A]

An amorphous thermoplastic resin film was obtained in the same manner as in Example 1A except that silica spherical fine particles having an average particle size of 0.5 μm [manufactured by Nippon Shokubai Co., Ltd.: trade name Seahostar (registered trademark) KE-P50] were used instead of the silica spherical fine particles having an average particle size of 1.0 μm in the production of the masterbatch of Example 1A.

[Example 3A]

An amorphous thermoplastic resin film was obtained in the same manner as in Example 1A except that in the production of the unstretched film of Example 1A, the content of the silica spherical fine particles in the dry blended material of polysulfone and masterbatch was 0.25% by mass.

[Example 4A]

An amorphous thermoplastic resin film was obtained in the same manner as in Example 1A except that in the production of the unstretched film of Example 1A, the content of the silica spherical fine particles in the dry blended material of polysulfone and masterbatch was 0.12% by mass.

[Example 5A]

An amorphous thermoplastic resin film was obtained in the same manner as in Example 1A except that in the production of the unstretched film of Example 1A, the content of the silica spherical fine particles in the dry blended material of polysulfone and masterbatch was 1.40% by mass.

[Example 6A]

An amorphous thermoplastic resin film was obtained in the same manner as in Example 1A except that silica spherical fine particles having an average particle size of 0.1 μm [manufactured by Shin-Etsu Chemical Co., Ltd.: trade name Shin-Etsu Silicone (registered trademark): OSG-100] were used instead of the silica spherical fine particles having an average particle size of 1.0 μm in the production of the masterbatch of Example 1A.

[Example 7A]

An amorphous thermoplastic resin film was obtained in the same manner as in Example 1A except that calcium carbonate fine particles having an average particle size of 0.2 μm [manufactured by Shiraishi Kogyo Kaisha, Ltd.: BRILLIANT (registered trademark): 1500] were used instead of the silica spherical fine particles having an average particle size of 1.0 μm in the production of the masterbatch of Example 1A.

[Example 8A]

An amorphous thermoplastic resin film was obtained in the same manner as in Example 1A except that in each production of the masterbatch and the unstretched film of Example 1A, a low-viscosity polysulfone [manufactured by BASF Japan Ltd.: trade name Ultrason (registered trademark) S2010, glass transition temperature 187°C] was used as polysulfone instead of [trade name Ultrason (registered trademark) S6010 manufactured by BASF Japan Ltd.] and in the production of an unstretched film, the extrusion amount and the take-up speed were adjusted so that the thickness was 9.5 μm. The MVR (Melt volume-flow rate) of a low-viscosity polysulfone [manufactured by BASF Japan Ltd.: trade name Ultrason (registered trademark) S2010] measured under conditions of a temperature of 360°C and a load of 10 kg in accordance with the provisions of ISO 1133 was 90 $cm^3$/10 min.

[Example 9A]

[Production of uniaxially stretched film]

An unstretched film produced in the same manner as in Example 1A was introduced into a longitudinal stretching machine, and stretched 1.5 times in the MD direction, and a 5.3 μm-thick uniaxially stretched film was wound up to obtain an amorphous thermoplastic resin film. The film temperature during stretching was 200°C.

[Example 10A]

[Production of biaxially stretched film]

A uniaxially stretched film produced in the same manner as in Example 9A was introduced into a tenter, and stretched 1.5 times in the TD direction in an oven at a temperature of 245°C, and a 3.6 μm-thick biaxially stretched film was wound up to obtain an amorphous thermoplastic resin film.

[Example 11A]

An amorphous thermoplastic resin film was obtained in the same manner as in Example 1A except that in each production of the masterbatch and the unstretched film of Example 1A, polycarbonate (PC) [manufactured by Teijin Limited: trade name Panlite (registered trademark) K-1300Y, glass transition temperature 150°C] was used instead of polysulfone, in the production of the masterbatch and the unstretched film, polycarbonate (PC) was melted at a resin temperature of 300°C, and the surface temperature of the mirror surface metal roll was maintained at 120°C.

[Example 12A]

[Production of uniaxially stretched film]

An amorphous thermoplastic resin film was obtained by winding up a 5.3 μm-thick uniaxially stretched film in the same manner as in Example 9A except that the film temperature during stretching was 120°C.

[Example 13A]

[Production of biaxially stretched film]

A uniaxially stretched film produced in the same manner as in Example 12A was introduced into a tenter, and stretched 1.5 times in the TD direction in an oven at a temperature of 245°C, and a 3.6 μm-thick biaxially stretched film was wound up to obtain an amorphous thermoplastic resin film.

[Example 14A]

An amorphous thermoplastic resin film was obtained in the same manner as in Example 13A except that in each production of the masterbatch and the unstretched film of Example 13A, a medium-viscosity polysulfone [manufactured by BASF Japan Ltd.: trade name Ultrason (registered trademark) S3010, glass transition temperature 187°C] was used as polysulfone instead of [trade name Ultrason (registered trademark) S6010 manufactured by BASF Japan Ltd.]. The MVR (Melt volume-flow rate) of a medium-viscosity polysulfone [manufactured by BASF Japan Ltd.: trade name Ultrason (registered trademark) S3010] measured under conditions of a temperature of 360°C and a load of 10 kg in accordance with the provisions of ISO 1133 was 40 $cm^3$/10 min.

[Comparative Example 1A]

An amorphous thermoplastic resin film was obtained in the same manner as in Example 1A except that silica spherical fine particles were not blended (that is, the content of the silica spherical fine particles in the amorphous thermoplastic resin film was 0.00% by mass) in the production of the masterbatch of Example 1A.

[Comparative Example 2A]

An amorphous thermoplastic resin film was obtained in the same manner as in Example 1A except that in the production of the unstretched film of Example 1A, the content of the silica spherical fine particles in the dry blended material of polysulfone and masterbatch was 2.00% by mass.

[Comparative Example 3A]

An amorphous thermoplastic resin film was obtained in the same manner as in Example 1A except that in the production of the unstretched film of Example 1A, the content of the silica spherical fine particles in the dry blended material of polysulfone and masterbatch was 3.00% by mass.

[Comparative Example 4A]

An amorphous thermoplastic resin film was obtained in the same manner as in Example 1A except that in the production of the unstretched film of Example 1A, the extrusion amount and the take-up speed were adjusted so that the thickness was 15.0 μm.

[Comparative Example 5A]

An amorphous thermoplastic resin film was obtained in the same manner as in Example 1A except that calcined kaolin fine particles having an average particle size of 0.5 μm [manufactured by IMERYS Minerals Japan K.K.: trade name Alphatex (registered trademark)] were used instead of the silica spherical fine particles having an average particle size of 1.0 μm in the production of the masterbatch of Example 1A.

[Comparative Example 6A]

An amorphous thermoplastic resin film was obtained in the same manner as in Example 1A except that talc fine particles having an average particle size of 0.6 μm [manufactured by Nippon Talc Co., Ltd.: trade name Nano Ace (registered trademark) D-600] were used instead of the silica spherical fine particles having an average particle size of 1.0 μm in the production of the masterbatch of Example 1.

[Comparative Example 7A]

An amorphous thermoplastic resin film was obtained in the same manner as in Example 1A except that silica spherical fine particles having an average particle size of 2.0 μm [manufactured by Mizusawa Industrial Chemicals, Ltd: trade name Silton (registered trademark): JC-20] were used instead of the silica spherical fine particles having an average particle size of 1.0 μm in the production of the masterbatch of Example 1A.

[Comparative Example 8A]

An unstretched film was obtained in the same manner as in Example 1A except that in each production of the

masterbatch and the unstretched film of Example 1A, polyethylene naphthalate (PEN) [manufactured by Teijin Limited: trade name Teonex (registered trademark) TN8065S, glass transition temperature 120°C] was used instead of polysulfone, and in the production of the masterbatch and the unstretched film, polyethylene naphthalate (PEN) was melted at a resin temperature of 300°C. The obtained unstretched film was introduced into a longitudinal stretching machine and stretched 3.0 times in the MD direction to obtain a uniaxially stretched film. The film temperature during stretching was 130°C. Then, the uniaxially stretched film was introduced into a tenter, stretched 3.2 times in the TD direction in an oven at a temperature of 130°C, and then heat-treated in an oven at a temperature of 220°C, and a 3.6 μm-thick biaxially stretched film was wound up to obtain a crystalline thermoplastic resin film.

[Comparative Example 9A]

An amorphous thermoplastic resin film was obtained in the same manner as in Example 1A except that in each production of the masterbatch and the unstretched film of Example 1A, a cyclic olefin copolymer (COC) [manufactured by Polyplastics Co., Ltd.: trade name TOPAS (registered trademark) 8007F-04, glass transition temperature 78°C] was used instead of polysulfone, and in the production of the masterbatch and the unstretched film, the cyclic olefin copolymer (COC) was melted at a resin temperature of 200°C, and the surface temperature of the mirror surface metal roll was maintained at 60°C.

[Comparative Example 10 A]

A crystalline thermoplastic resin film was obtained in the same manner as in Example 8A except that in each production of the masterbatch and the unstretched film of Comparative Example 8A, polyphenylene sulfide (PPS) [manufactured by DIC Corporation: trade name PPSMA520, glass transition temperature 88°C] was used instead of polysulfone, MD stretching was performed at a film temperature of 100°C, and TD stretching was performed in an oven at a temperature of 100°C.

[Comparative Example 11 A]

A 10.0 μm-thick crystalline thermoplastic resin film was obtained in the same manner as in Example 1A except that in each production of the masterbatch and the unstretched film of Example 1A, polyimide (PI) [manufactured by Mitsui Chemicals, Inc.: trade name AURUM (registered trademark) PL500A, glass transition temperature 250°C] was used instead of polysulfone, in the production of the masterbatch and the unstretched film, polyimide (PI) was melted at a resin temperature of 400°C, and the surface temperature of the mirror surface metal roll was maintained at 220°C.

[Additional description of Examples 1A to 14A and Comparative Examples 1A to 11A]

Each of the films of Examples 1A to 14A and Comparative Examples 1A to 11A is composed of a single layer. The resin (also referred to as base resin) constituting the films of Examples 1A to 10A and 12A to 14A and Comparative Examples 1A to 7A is PSU, the resin constituting the film of Example 11A is PC, the resin constituting the film of Comparative Example 8A is PEN, the resin constituting the film of Comparative Example 9A is COC, the resin constituting the film of Comparative Example 10A is PPS, and the resin constituting the film of Comparative Example 11A is PI.

[Table 1A]

| | Configuration of dielectric film for capacitors | | | | | | | | Characteristics of dielectric film for capacitors | | | | | |
|---|---|---|---|---|---|---|---|---|---|---|---|---|---|---|
| | Base resin | | | Fine particles | | | Stretched/ unstretched | Thickness | Dielectric breakdown strength | | Ratio of dielectric breakdown strength | Slit processing suitability | Continuous film forming properties | Roll diameter (mm) |
| | Material | Crystalline/ amorphous | Tg | Material | Average particle size | Content | | | 23°C | 125°C | Value at 125°C/ value at 23°C | | | |
| | Type | | °C | Type | µm | Mass% | | µm | $V_{DC}$/µm | $V_{DC}$/µm | | | | |
| Example 1A | PSU | Amorphous | 187 | Silica | 1.0 | 0.50 | Unstretched | 8.0 | 367 | 377 | 1.03 | ⊙ | ⊙ | 27 |
| Example 2A | PSU | Amorphous | 187 | Silica | 0.5 | 0.50 | Unstretched | 8.0 | 370 | 382 | 1.03 | ⊙ | ⊙ | 27 |
| Example 3A | PSU | Amorphous | 187 | Silica | 1.0 | 0.25 | Unstretched | 8.0 | 373 | 391 | 1.05 | ⊙ | ⊙ | 27 |
| Example 4A | PSU | Amorphous | 187 | Silica | 1.0 | 0.12 | Unstretched | 8.0 | 372 | 389 | 1.05 | ○ | ⊙ | 27 |
| Example 5A | PSU | Amorphous | 187 | Silica | 1.0 | 1.40 | Unstretched | 8.0 | 339 | 348 | 1.03 | ⊙ | ○ | 27 |
| Example 6A | PSU | Amorphous | 187 | Silica | 0.1 | 0.50 | Unstretched | 8.0 | 372 | 383 | 1.03 | ○ | ⊙ | 27 |
| Example 7A | PSU | Amorphous | 187 | Calcium carbonate | 0.2 | 0.50 | Unstretched | 8.0 | 344 | 352 | 1.02 | ○ | ○ | 27 |
| Example 8A | PSU Low viscosity | Amorphous | 187 | Silica | 1.0 | 0.50 | Unstretched | 9.5 | 362 | 365 | 1.01 | ⊙ | ○ | 29 |
| Example 9A | PSU | Amorphous | 187 | Silica | 1.0 | 0.50 | Stretched | 5.3 | 379 | 406 | 1.07 | ⊙ | ○ | 23 |
| Example 10A | PSU | Amorphous | 187 | Silica | 1.0 | 0.50 | Stretched | 3.6 | 380 | 404 | 1.06 | ⊙ | ○ | 20 |
| Example 11A | PC | Amorphous | 150 | Silica | 1.0 | 0.50 | Unstretched | 8.0 | 409 | 413 | 1.01 | ⊙ | ○ | 27 |
| Example 12A | PSU | Amorphous | 187 | Silica | 1.0 | 0.50 | Stretched | 5.3 | 381 | 407 | 1.07 | ⊙ | ○ | 23 |
| Example 13A | PSU | Amorphous | 187 | Silica | 1.0 | 0.50 | Stretched | 3.6 | 382 | 409 | 1.07 | ⊙ | ○ | 20 |
| Example 14A | PSU Medium viscosity | Amorphous | 187 | Silica | 1.0 | 0.50 | Stretched | 3.6 | 381 | 411 | 1.08 | ⊙ | ○ | 20 |
| Comparative Example 1A | PSU | Amorphous | 187 | - | - | 0.00 | Unstretched | 8.0 | 371 | 384 | 1.04 | △ | ○ | 27 |
| Comparative Example 2A | PSU | Amorphous | 187 | Silica | 1.0 | 2.00 | Unstretched | 8.0 | 298 | 306 | 1.03 | ⊙ | ○ | 27 |
| Comparative Example 3A | PSU | Amorphous | 187 | Silica | 1.0 | 3.00 | Unstretched | 8.0 | 286 | 292 | 1.02 | ⊙ | ○ | 27 |
| Comparative Example 4A | PSU | Amorphous | 187 | Silica | 1.0 | 0.50 | Unstretched | 15.0 | 378 | 389 | 1.03 | ○ | ○ | 36 |
| Comparative Example 5A | PSU | Amorphous | 187 | Calcined kaolin | 0.5 | 0.50 | Unstretched | 8.0 | 256 | 251 | 0.98 | ⊙ | ○ | 27 |
| Comparative Example 6A | PSU | Amorphous | 187 | Talc | 0.6 | 0.50 | Unstretched | 8.0 | 302 | 285 | 0.94 | ⊙ | ○ | 27 |
| Comparative Example 7A | PSU | Amorphous | 187 | Silica | 2.0 | 0.50 | Unstretched | 8.0 | 253 | 244 | 0.96 | ⊙ | ⊙ | 27 |
| Comparative Example 8A | PEN | Crystalline | 120 | Silica | 1.0 | 0.50 | Stretched | 8.0 | 260 | 248 | 0.95 | ○ | △ | 27 |
| Comparative Example 9A | COC | Amorphous | 78 | Silica | 1.0 | 0.50 | Unstretched | 8.0 | 412 | 52 | 0.13 | ○ | △ | 27 |
| Comparative Example 10A | PPS | Crystalline | 88 | Silica | 1.0 | 0.50 | Stretched | 8.0 | 335 | 296 | 0.88 | ○ | △ | 27 |
| Comparative Example 11A | PI | Crystalline | 250 | Silica | 1.0 | 0.50 | Unstretched | 10.0 | 317 | 313 | 0.99 | △ | × | 30 |

The amorphous thermoplastic resin films of Examples 1A to 14A includes an amorphous thermoplastic resin having a glass transition temperature (Tg) of 130°C or more and less than 200°C and at least one kind of particles

selected from the group consisting of silica and calcium carbonate, the average particle size of the particles is 0.1 μm or more and 1.5 μm or less, the content of the particles is 0.1% by mass or more and 1.5% by mass or less, and the thickness is 9.5 μm or less. It can be seen that the amorphous thermoplastic resin films of Examples 1A to 14A have high dielectric breakdown strength at high temperature, have a small roll diameter during winding because of their small thickness, and are excellent in slit processing suitability.

[Measurement method and evaluation method]

Various measurement methods and evaluation methods in Examples 1B to 12B and Comparative Examples 1B to 8B are the same as those in Examples 1A to 14A and Comparative Examples 1A to 11A, and the dielectric breakdown strength in an environment at 140°C is as follows.

(Dielectric breakdown strength in environment at 140°C)

The dielectric breakdown strength in the environment at 140°C is measured and calculated in the same manner as the dielectric breakdown strength in the environment at 125°C except that the measurement environment is an inside of a forced circulation oven at a set temperature of 140°C.

Since the amorphous thermoplastic resin film of Comparative Example 4B described later was thick, the dielectric breakdown strength at each temperature was equal to or more than a measurement limit, and therefore the measurement result was denoted as "-" in Table 1B.

[Example 1B]

[Production of masterbatch]

As an amorphous thermoplastic resin, a dry blended material obtained by weighing and mixing a commercially available polysulfone (PSU) resin [manufactured by BASF Japan Ltd.: trade name Ultrason (registered trademark) S6010, glass transition temperature 187°C] and silica spherical fine particles having an average particle size of 1.0 μm [manufactured by Nippon Shokubai Co., Ltd.: trade name Seahostar (registered trademark) KE-P100] at a mass ratio of (resin): (fine particles) = 90: 10 was supplied to an extruder, melted at a resin temperature of 330°C, and then extruded using a strand die. The strand was cooled and then cut into pellets to produce a masterbatch.

[Production of unstretched film]

A dry blended material (content of silica spherical fine particles in the dry blended material was 0.5% by mass) obtained by weighing and mixing a polysulfone (PSU) resin [manufactured by BASF Japan Ltd.: trade name Ultrason (registered trademark) S6010, glass transition temperature 187°C] and a masterbatch at a mass ratio of (resin): (masterbatch) = 95: 5 was supplied to an extruder, melted at a resin temperature of 330°C, then passed through a filter having a mesh size of 5 μm, extruded using a T-die, and brought into contact with a mirror surface metal roll (cooling roll) having a surface temperature maintained at 140°C by electrostatic pinning, to be solidified, and thus to be formed into a film shape, and the film was wound up. At this time, an extrusion amount and a take-up speed were adjusted so that the thickness was 8.0 μm, thereby obtaining an amorphous thermoplastic resin film. The MVR (Melt volume-flow rate) of a polysulfone (PSU) resin [manufactured by BASF Japan Ltd.: trade name Ultrason (registered trademark) S6010] measured under conditions of a temperature of 360°C and a load of 10 kg in accordance with the provisions of ISO 1133 was 30 $cm^3$/10 min.

[Example 2B]

An amorphous thermoplastic resin film was obtained in the same manner as in Example 1B except that silica spherical fine particles having an average particle size of 0.5 μm [manufactured by Nippon Shokubai Co., Ltd.: trade name Seahostar (registered trademark) KE-P50] were used instead of the silica spherical fine particles having an average particle size of 1.0 μm in the production of the masterbatch of Example 1B.

[Example 3B]

An amorphous thermoplastic resin film was obtained in the same manner as in Example 1B except that in the production of the unstretched film of Example 1B, the content of the silica spherical fine particles in the dry blended material of polysulfone and masterbatch was 0.25% by mass.

[Example 4B]

An amorphous thermoplastic resin film was obtained in the same manner as in Example 1B except that in the production of the unstretched film of Example 1B, the content of the silica spherical fine particles in the dry blended material of polysulfone and masterbatch was 0.12% by mass.

[Example 5B]

An amorphous thermoplastic resin film was obtained in the same manner as in Example 1B except that in the production of the unstretched film of Example 1B, the content of the silica spherical fine particles in the dry blended material of polysulfone and masterbatch was 1.40% by mass.

[Example 6B]

[Production of uniaxially stretched film]

An unstretched film produced in the same manner as in Example 1B was introduced into a longitudinal stretching machine and stretched 1.5 times in the MD direction. Thereafter, the film was held with a clip, and heat-treated in an oven at 220°C for 10 seconds. A uniaxially stretched film having a thickness of 5.3 μm was wound up. The film temperature during stretching was 200°C.

[Example 7B]

[Production of biaxially stretched film]

A uniaxially stretched film produced in the same manner as in Example 6B was introduced into a tenter, and stretched 1.5 times in the TD direction in an oven at a temperature of 245°C. Thereafter, the film was heat-treated in an oven at 220°C for 10 seconds while being held by the clip. A biaxially stretched film having a thickness of 3.6 μm was wound up.

[Example 8B]

An amorphous thermoplastic resin film was obtained in the same manner as in Example 1B except that in each production of the masterbatch and the unstretched film of Example 1B, polyethersulfone (PES) [manufactured by BASF Japan Ltd.: trade name Ultrason (registered trademark) E2010, glass transition temperature 225°C] was used instead of polysulfone, silica spherical fine particles having an average particle size of 0.1 μm [manufactured by Shin-Etsu Chemical Co., Ltd.: trade name Shin-Etsu Silicone (registered trademark): OSG-100] were used instead of the silica spherical fine particles having an average particle size of 1.0 μm in the production of the masterbatch, polyethersulfone (PES) was melted at a resin temperature of 360°C in the production of the masterbatch and the unstretched film, and the surface temperature of the mirror surface metal roll was maintained at 170°C in the production of the unstretched film.

[Example 9B]

An amorphous thermoplastic resin film was obtained in the same manner as in Example 1B except that in each production of the masterbatch and the unstretched film of Example 1B, polyphenylsulfone (PPSU) [manufactured by BASF Japan Ltd.: trade name Ultrason (registered trademark) P3010, glass transition temperature 220°C] was used instead of polysulfone, silica spherical fine particles having an average particle size of 0.1 μm [manufactured by Shin-Etsu Chemical Co., Ltd.: trade name Shin-Etsu Silicone (registered trademark): OSG-100] were used instead of the silica spherical fine particles having an average particle size of 1.0 μm in the production of the masterbatch, polyphenylsulfone (PPSU) was melted at a resin temperature of 360°C in the production of the masterbatch and the unstretched film, and the surface temperature of the mirror surface metal roll was maintained at 160°C in the production of the unstretched film.

[Example 10B]

[Production of uniaxially stretched film]

An amorphous thermoplastic resin film was obtained by winding up a 5.3 μm-thick uniaxially stretched film in

the same manner as in Example 6B except that the film temperature during stretching was 120°C.

[Example 11B]

[Production of biaxially stretched film]

A uniaxially stretched film produced in the same manner as in Example 10B was introduced into a tenter, and stretched 1.5 times in the TD direction in an oven at a temperature of 245°C. Thereafter, the film was heat-treated in an oven at 220°C for 10 seconds while being held by the clip. A biaxially stretched film having a thickness of 3.6 μm was wound up.

[Example 12B]

An amorphous thermoplastic resin film was obtained in the same manner as in Example 11B except that in each production of the masterbatch and the unstretched film of Example 11B, a medium-viscosity polysulfone [manufactured by BASF Japan Ltd.: trade name Ultrason (registered trademark) S3010, glass transition temperature 187°C] was used as polysulfone instead of [trade name Ultrason (registered trademark) S6010 manufactured by BASF Japan Ltd.]. The MVR (Melt volume-flow rate) of a medium-viscosity polysulfone [manufactured by BASF Japan Ltd.: trade name Ultrason (registered trademark) S3010] measured under conditions of a temperature of 360°C and a load of 10 kg in accordance with the provisions of ISO 1133 was 40 $cm^3$/10 min.

[Comparative Example 1B]

An amorphous thermoplastic resin film was obtained in the same manner as in Example 1B except that silica spherical fine particles were not blended (that is, the content of the silica spherical fine particles in the amorphous thermoplastic resin film was 0.00% by mass) in the production of the masterbatch of Example 1B.

[Comparative Example 2B]

An amorphous thermoplastic resin film was obtained in the same manner as in Example 1B except that in the production of the unstretched film of Example 1B, the content of the silica spherical fine particles in the dry blended material of polysulfone and masterbatch was 2.00% by mass.

[Comparative Example 3B]

An amorphous thermoplastic resin film was obtained in the same manner as in Example 8B except that in the production of the unstretched film of Example 8B, the content of the silica spherical fine particles in a dry blended material of polyethersulfone and masterbatch was 30.00% by mass, and in the production of the unstretched film, the extrusion amount and the take-up speed were adjusted so that the thickness was 5.0 μm.

[Comparative Example 4B]

An amorphous thermoplastic resin film was obtained in the same manner as in Example 9B except that in the production of the unstretched film of Example 9B, the content of the silica spherical fine particles in a dry blended material of polyphenylsulfone and masterbatch was 1.00% by mass, and in the production of the unstretched film, the extrusion amount and the take-up speed were adjusted so that the thickness was 55.0 μm.

[Comparative Example 5B]

An amorphous thermoplastic resin film was obtained in the same manner as in Example 9B except that silica spherical fine particles having an average particle size of 2.0 μm [manufactured by Mizusawa Industrial Chemicals, Ltd: trade name Silton (registered trademark): JC-20] were used instead of the silica spherical fine particles having an average particle size of 0.1 μm in the production of the masterbatch of Example 9B.

[Comparative Example 6B]

An unstretched film was obtained in the same manner as in Example 1B except that in each production of the masterbatch and the unstretched film of Example 1B, polyphenylene sulfide (PPS) [manufactured by DIC Corporation:

trade name PPSMA520, glass transition temperature 88°C] was used instead of polysulfone, and in the production of the masterbatch and the unstretched film, polyphenylene sulfide (PPS) was melted at a resin temperature of 310°C. The obtained unstretched film was introduced into a longitudinal stretching machine and stretched 3.0 times in the MD direction to obtain a uniaxially stretched film. The film temperature during stretching was 100°C. Then, the uniaxially stretched film was introduced into a tenter, stretched 3.2 times in the TD direction in an oven at a temperature of 100°C, and then heat-treated in an oven at a temperature of 220°C, and a 3.6 μm-thick biaxially stretched film was wound up to obtain a crystalline thermoplastic resin film.

[Comparative Example 7B]

A 10.0 μm-thick crystalline thermoplastic resin film was obtained in the same manner as in Example 1B except that in each production of the masterbatch and the unstretched film of Example 1B, polyimide (PI) [manufactured by Mitsui Chemicals, Inc.: trade name AURUM (registered trademark) PL500A, glass transition temperature 250°C] was used instead of polysulfone, in the production of the masterbatch and the unstretched film, polyimide (PI) was melted at a resin temperature of 400°C, and the surface temperature of the mirror surface metal roll was maintained at 220°C.

[Comparative Example 8]

An amorphous thermoplastic resin film was obtained in the same manner as in Comparative Example 1B except that in each production of the masterbatch and the unstretched film of Comparative Example 1B, polyetherimide (PEI) [manufactured by SABIC Japan, Ltd.: trade name ULTEM (registered trademark), glass transition temperature 215°C] was used instead of polysulfone, in the production of the masterbatch and the unstretched film, polyetherimide (PEI) was melted at a resin temperature of 360°C, and the surface temperature of the mirror surface metal roll was maintained at 170°C.

[Additional description of Examples 1B to 9B and Comparative Examples 1B to 8B]

Each of the films of Examples 1B to 8B and Comparative Examples 1B to 8B is composed of a single layer. The resin (also referred to as base resin) constituting the films of Examples 1B to 7B and Comparative Examples 1B to 2B is PSU, the resin constituting the films of Example 8B and Comparative Example 3B is PES, the resin constituting the films of Example 9B and Comparative Examples 4B to 5B is PPSU, the resin constituting the film of Comparative Example 6B is PPS, the resin constituting the film of Comparative Example 7B is PI, and the resin constituting the film of Comparative Example 8B is PEI.

[Table 1B]

| | Configuration of dielectric film for capacitors | | | | | | | | Characteristics of dielectric film for capacitors | | | | | |
|---|---|---|---|---|---|---|---|---|---|---|---|---|---|---|
| | Base resin | | | Fine particles | | | Stretched/ unstretched | Thickness | Dielectric breakdown strength | | | Slit processing suitability | Continuous film forming properties | Roll diameter (mm) |
| | Material | Crystalline/ amorphous | Tg | Material | Average particle size | Content | | | 23°C | 125°C | 140°C | | | |
| | Type | | °C | Type | μm | Mass% | | μm | $V_{DC}/\mu m$ | $V_{DC}/\mu m$ | $V_{DC}/\mu m$ | | | |
| Example 1B | PSU | Amorphous | 187 | Silica | 1.0 | 0.50 | Unstretched | 8.0 | 367 | 377 | 371 | ⊙ | ⊙ | 27 |
| Example 2B | PSU | Amorphous | 187 | Silica | 0.5 | 0.50 | Unstretched | 8.0 | 370 | 382 | 375 | ⊙ | ⊙ | 27 |
| Example 3B | PSU | Amorphous | 187 | Silica | 1.0 | 0.25 | Unstretched | 8.0 | 373 | 391 | 381 | ⊙ | ⊙ | 27 |
| Example 4B | PSU | Amorphous | 187 | Silica | 1.0 | 0.12 | Unstretched | 8.0 | 372 | 389 | 381 | ○ | ⊙ | 27 |
| Example 5B | PSU | Amorphous | 187 | Silica | 0.5 | 1.40 | Unstretched | 8.0 | 339 | 348 | 325 | ⊙ | ○ | 27 |
| Example 6B | PSU | Amorphous | 187 | Silica | 1.0 | 0.50 | Stretched | 5.3 | 394 | 406 | 386 | ⊙ | ○ | 23 |
| Example 7B | PSU | Amorphous | 187 | Silica | 1.0 | 0.50 | Stretched | 3.6 | 400 | 404 | 386 | ⊙ | ○ | 20 |
| Example 8B | PES | Amorphous | 225 | Silica | 0.1 | 0.50 | Unstretched | 8.0 | 304 | 302 | 300 | ○ | ○ | 27 |
| Example 9B | PPSU | Amorphous | 220 | Silica | 0.1 | 0.50 | Unstretched | 8.0 | 324 | 331 | 329 | ○ | ○ | 27 |
| Example 10B | PSU | Amorphous | 187 | Silica | 1.0 | 0.50 | Stretched | 5.3 | 381 | 407 | 392 | ⊙ | ○ | 23 |
| Example 11B | PSU | Amorphous | 187 | Silica | 1.0 | 0.50 | Stretched | 3.6 | 382 | 409 | 394 | ⊙ | ○ | 20 |
| Example 12B | PSU Medium viscosity | Amorphous | 187 | Silica | 1.0 | 0.50 | Stretched | 3.6 | 381 | 411 | 408 | ⊙ | ○ | 20 |
| Comparative Example 1B | PSU | Amorphous | 187 | - | - | 0.00 | Unstretched | 8.0 | 371 | 384 | 381 | △ | ○ | 27 |
| Comparative Example 2B | PSU | Amorphous | 187 | Silica | 1.0 | 2.00 | Unstretched | 8.0 | 298 | 306 | 288 | ○ | ⊙ | 27 |
| Comparative Example 3B | PES | Amorphous | 225 | Silica | 0.1 | 30.00 | Unstretched | 5.0 | 202 | 205 | 191 | ⊙ | △ | 23 |
| Comparative Example 4B | PPSU | Amorphous | 220 | Silica | 0.1 | 1.00 | Unstretched | 55.0 | - | - | - | × | ⊙ | 66 |
| Comparative Example 5B | PPSU | Amorphous | 220 | Silica | 2.0 | 0.50 | Unstretched | 8.0 | 192 | 187 | 188 | ⊙ | ⊙ | 27 |
| Comparative Example 6B | PPS | Crystalline | 88 | Silica | 1.0 | 0.50 | Stretched | 8.0 | 335 | 296 | 195 | ○ | △ | 27 |
| Comparative Example 7B | PI | Crystalline | 250 | Silica | 1.0 | 0.50 | Unstretched | 10.0 | 317 | 313 | 324 | △ | × | 30 |
| Comparative Example 8B | PEI | Amorphous | 215 | - | - | 0.00 | Unstretched | 8.0 | 341 | 334 | 330 | × | × | 27 |

The amorphous thermoplastic resin films of Examples 1B to 12B includes an amorphous thermoplastic resin having a glass transition temperature (Tg) of 170°C or more and 230°C or less and having a sulfonyl group in the main

chain and at least one kind of particles selected from the group consisting of silica and calcium carbonate, the average particle size of the particles is 0.1 μm or more and 1.5 μm or less, the content of the particles is 0.1% by mass or more and 1.5% by mass or less, and the thickness is 9.5 μm or less. It can be seen that the amorphous thermoplastic resin films of Examples 1B to 12B have high dielectric breakdown strength at high temperature, have a small roll diameter during winding because of their small thickness, and are excellent in slit processing suitability.

## Claims

**1.** An amorphous thermoplastic resin film comprising:

an amorphous thermoplastic resin having a glass transition temperature (Tg) of 130°C or more and less than 200°C; and
at least one kind of particles selected from the group consisting of silica and calcium carbonate,
wherein
an average particle size of the particles is 0.1 μm or more and 1.5 μm or less,
a content of the particles is 0.1% by mass or more and 1.5% by mass or less, and
a thickness is 9.5 μm or less.

**2.** The amorphous thermoplastic resin film according to claim 1, wherein dielectric breakdown strength in an environment at 125°C is 300 $V_{DC}$/μm or more.

**3.** The amorphous thermoplastic resin film according to claim 1 or 2, wherein the amorphous thermoplastic resin has a repeating unit represented by Formula: $-[Ph-C(CH_3)_2-Ph]-$ in a main chain.

**4.** The amorphous thermoplastic resin film according to any one of claims 1 to 3, comprising an unstretched film.

**5.** An amorphous thermoplastic resin film comprising:

an amorphous thermoplastic resin having a glass transition temperature (Tg) of 170°C or more and 230°C or less and having a sulfonyl group in a main chain; and
at least one kind of particles selected from the group consisting of silica and calcium carbonate,
wherein
an average particle size of the particles is 0.1 μm or more and 1.5 μm or less,
a content of the particles is 0.1% by mass or more and 1.5% by mass or less, and
a thickness is 9.5 μm or less.

**6.** The amorphous thermoplastic resin film according to claim 5, wherein dielectric breakdown strength in an environment at 140°C is 300 $V_{DC}$/μm or more.

**7.** The amorphous thermoplastic resin film according to claim 5 or 6, wherein dielectric breakdown strength in an environment at 125°C is 400 $V_{DC}$/μm or more.

**8.** The amorphous thermoplastic resin film according to any one of claims 5 to 7, comprising a stretched film.

**9.** The amorphous thermoplastic resin film according to any one of claims 1 to 8, which is a dielectric film for capacitors.

**10.** A film roll obtained by winding the amorphous thermoplastic resin film according to any one of claims 1 to 9.

**11.** A capacitor metalized film comprising a metal film on one side or both sides of the amorphous thermoplastic resin film according to any one of claims 1 to 9.

**12.** A capacitor comprising the amorphous thermoplastic resin film according to claims 1 to 9.

## INTERNATIONAL SEARCH REPORT

International application No.
PCT/JP2019/051446

**A. CLASSIFICATION OF SUBJECT MATTER**

B29C 55/02(2006.01)i; B29C 55/06(2006.01)i; B29C 55/14(2006.01)i; H01B 17/56(2006.01)i; C08L 101/00(2006.01)i; H01B 3/30(2006.01)i; C08J 5/18(2006.01)i; C08K 3/26(2006.01)i; C08K 3/36(2006.01)i; B29C 48/08(2019.01)i; B29C 48/305(2019.01)i; B29C 48/88(2019.01)i
FI: C08L101/00; B29C48/08; B29C48/305; B29C48/88; B29C55/02; B29C55/06; B29C55/14; C08J5/18 CEZ; C08K3/26; C08K3/36; H01B3/30 N; H01B3/30 Q; H01B17/56 A

According to International Patent Classification (IPC) or to both national classification and IPC

**B. FIELDS SEARCHED**

Minimum documentation searched (classification system followed by classification symbols)
B29C55/02; B29C55/06; B29C55/14; H01B17/56; C08L101/00; H01B3/30; C08J5/18; C08K3/26; C08K3/36; B29C48/08; B29C48/305; B29C48/88

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2001-323146 A (TORAY INDUSTRIES, INC.) 20.11.2001 (2001-11-20) claims 1, 2, 4, 6, paragraphs [0023], [0059], [0122]-[0123], [0124]-[0125], [0126]-[0127], [0134]-[0135], table 1, examples 6-8, comparative example 3 | 1-12 |
| X | JP 2001-261959 A (TORAY INDUSTRIES, INC.) 26.09.2001 (2001-09-26) claims 1, 4, 5, paragraphs [0008], [0013]-[0021], [0036], comparative example 2, paragraph [0053], table 1 | 1-4, 9-12 |
| X | WO 2001/014462 A1 (TORAY INDUSTRIES, INC.) 01.03.2001 (2001-03-01) claims 1, 8, 23, page 24, lines 8-11, page 43, lines 2-5, example 9, table 1 | 1-2, 4-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 March 2020 (11.03.2020) | 24 March 2020 (24.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/051446

C (Continuation). DOCUMENTS CONSIDERED TO BE RELEVANT

| Category* | Citation of document, with indication, where appropriate, of the relevant passages | Relevant to claim No. |
|---|---|---|
| X | JP 63-270760 A (IDEMITSU PETROCHEMICAL CO., LTD.) 08.11.1988 (1988-11-08) claims 1, 2, examples 1-6, 9, 10, 12, 13, comparative examples 2-5, table 1 | 1-4, 9-12 |
| P, X | JP 2019-65119 A (TEIJIN FILM SOLUTIONS LIMITED) 25.04.2019 (2019-04-25) claims 1, 3-5, 8-10, paragraph [0042], examples 1-8, comparative examples 1-4, table 1 | 1-4, 9-12 |
| A | JP 2013-55270 A (TORAY INDUSTRIES, INC.) 21.03.2013 (2013-03-21) | 1-12 |
| A | JP 6-258522 A (FUJI PHOTO FILM CO., LTD.) 16.09.1994 (1994-09-16) claims, examples | 1-12 |
| A | JP 57-14849 A (FUJI PHOTO FILM CO., LTD.) 26.01.1982 (1982-01-26) claims, examples | 1-12 |

Form PCT/ISA/210 (continuation of second sheet) (January 2015)

**INTERNATIONAL SEARCH REPORT**
Information on patent family members

International application No.
PCT/JP2019/051446

| Patent Documents referred in the Report | Publication Date | Patent Family | Publication Date |
|---|---|---|---|
| JP 2001-323146 A | 20 Nov. 2001 | (Family: none) | |
| JP 2001-261959 A | 26 Sep. 2001 | (Family: none) | |
| WO 2001/014462 A1 | 01 Mar. 2001 | JP 2001-246712 A<br>US 7022396 B1<br>EP 1142936 A1<br>claims 1, 8, paragraphs [0075], [0167], example 9, table 1<br>JP 2001-129953 A<br>JP 2001-226502 A<br>ID 29189 A<br>CN 1320138 A | |
| JP 63-270760 A | 08 Nov. 1988 | (Family: none) | |
| JP 2019-65119 A | 25 Apr. 2019 | (Family: none) | |
| JP 2013-55270 A | 21 Mar. 2013 | (Family: none) | |
| JP 6-258522 A | 16 Sep. 1994 | (Family: none) | |
| JP 57-14849 A | 26 Jan. 1982 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60068505 A